# EUROPEAN PATENT SPECIFICATION

(11) **EP 3 000 867 B1**
(45) Date of publication and mention of the grant of the patent: **04.07.2018**
(21) Application number: 14801234.7
(22) Date of filing: 19.05.2014
(51) Int. Cl.: A23D 9/007, C11B 5/00

(54) **FAT COMPOSITION**
FETTZUSAMMENSETZUNG
COMPOSITION LIPIDIQUE

(30) Priority: 20.05.2013 JP 2013106205; 20.05.2013 JP 2013106206
(43) Date of publication of application: 30.03.2016
(73) Proprietor: Kao Corporation, Chuo-ku, Tokyo 103-8210 (JP)
(72) Inventor: MATSUDA, Yuumi, Sumida-ku, Tokyo 131-8501 (JP); HOMMA, Rika, Sumida-ku, Tokyo 131-8501 (JP)
(74) Representative: Hoffmann Eitle
(86) International application number: PCT/JP2014/063233
(87) International publication number: WO 2014/189012

(56) References cited:
- EP-A1- 0 454 097
- WO-A1-2009/013757
- WO-A1-2013/147131
- JP-A- 2003 160 794
- JP-A- 2012 528 793
- US-A- 5 017 397
- US-A- 5 871 757
- US-A1- 2010 159 079
- US-A1- 2011 008 457
- US-A1- 2012 027 787

## Description

### Field of the Invention

The present invention relates to a fat or oil composition.

### Background of the Invention

Many investigations have been made on functions of fatty acids in fats or oils in response to increasing health consciousness in recent years. For example, it is known that ω3 highly-unsaturated fatty acids such as α-linolenic acid, eicosapentaenoic acid, and docosahexaenoic acid have prevention effects against coronary artery disease, cerebral stroke, and the like. Further, those fatty acids cannot be synthesized in a living human body, shortage of the fatty acids leads to onset of dermatitis and the like, and hence use of fats or oils containing the fatty acids has been desired. In 2005, the Japanese Ministry of Health, Labour and Welfare defined a recommended total intake (adult) of ω3 highly-unsaturated fatty acids including α-linolenic acid as 1 g/day.

Meanwhile, a fat or oil rich in α-linolenic acid has very low oxidative stability and is liable to produce deterioration odor and unpleasant odor/taste, and hence practical use thereof is remarkably restricted.

As technologies for improving oxidative stability of

As technologies for improving oxidative stability of a fat or oil, there has been known, for example, a method involving adding a tocopherol to Lamiaceae oil (Patent Document 1), and a method involving adding a roasted sesame oil, an ascorbic acid ester, and an herb extract to a fat or oil containing a polyunsaturated fatty acid to stabilize the fat or oil (Patent Document 2).

Further, as an antioxidant, there have been known a lipophilic antioxidant containing, for example, a bayberry extract and a rosemary extract (Patent Document 3), a lipophilic antioxidant containing gallic acid, a water-soluble antioxidant, and an oil-soluble antioxidant (Patent Document 4), and an antioxidant composition including an acetone extract of tea leaves together with a tocopherol, and an ascorbic acid ester (Patent Document 5) . In addition, the rosemary extract has been known to have a high antioxidative property (Non Patent Document 1), an antioxidant including a rosemary extract that includes hexanal, carnosol, and carnosic acid in specified amounts (Patent Document 6), and the like have been reported.

EP 0 454 097 A1 describes antioxidant composition obtained from the supercritical fluid carbon dioxide extraction of a Labiatae family herb and having at least 30% by weight carnosic acid and less than 5 ml water distillable essential oil per 100 grams. The composition is said to be substantially free of organic solvent and to be soluble in food-grade oils and grain alcohol. The composition further is said to provide an antioxidant activity comparable to that of BHA and BHT.

WO 2009/013757 A1 describes a water-in-oil antioxidant composition for use as an additive to cooking oils, for inhibiting their oxidation and subsequent loss of stability and quality, wherein the water-in-oil composition comprises an exceptionally high water content, water soluble anti-oxidants, specifically ascorbic acid and anti-oxidant extracts of plants of the Labiate family, oil and an emulsifier.

US 2012/027787 A1 describes a composition of matter comprising a shelf stable, super critical, CO2 fluid extracted seed oil derived from a cracked biomass of perilla frutescens, the seed oil comprising from about 60 to about 95 percent w/w of PUFAs in a ratio of from about 4:1 to about 6:1 alpha-linolenic acid (ALA) to linoleic acid (LA) and a mixture of selected antioxidants.

US 5,871,757 A describes polyunsaturated oils such as triply or higher ethylenically unsaturated organic materials that are stabilized against ambient temperature atmospheric oxidation by the addition of an essential oil such as thyme oil, oregano oil, pepper oil or clove oil.

US 2011/008457 A1 relates to a herbal and oil composition and methods for modulating fatty acid composition and metabolism in an animal. In one aspect, it describes a composition comprising rosemary extract, oregano extract, and a polyunsaturated oil. In a particular embodiment, the polyunsaturated oil is fish oil or a derivative thereof.

US 2010/159079 A1 describes an encapsulate comprising an outer shell and an inner core formed using sol/gel technology. Preferably, the encapsulates are incorporated into foods such as weight management foods, preferably nutrition bars, ready-to-drink beverages, powdered beverages or soups.

US 5,017,397 A describes natural plant extracts prepared from ground leaves of the Labiatae family of domestic herbs by application of a supercritical fluid extraction and fractionation process with carbon dioxide under specific operating conditions. The extracts are said to have greater antioxidant activity than natural antioxidants extracted using other processes such as solvent extraction or molecular distillation. The extracts are said to be oil soluble, colorless and flavorless when used at the optimum levels and to be effective in animal and vegetable fats and oils, processed meats and fish, processed foods and beverages, food colorants, cosmetics and health-care products at usage rates of 0.01-0.05% of fat/oil. Starting materials include Rosmarinus spp. or Salvia spp. or Thymis spp. or Origanum spp. of the common domestic herbs rosemary, sage, thyme and oregano or residues of same after removal of volatile aromatic and flavor components by means of, steam distillation, subcritical carbon dioxide or supercritical carbon dioxide at pressures of less than 350 bar.

### Citation List

### Patent Document

[Patent Document 1] JP-A-H08-116878
[Patent Document 2] JP-A-H02-189394
[Patent Document 3] JP-A-2007-185138
[Patent Document 4] JP-A-2002-142673
[Patent Document 6] JP-A-2004-204212

### Non Patent Document

[Non Patent Document 1] "Agric. Food Chem.", 1996, Vol. 44, No. 1, p. 131-135

### Summary of the Invention

The present invention provides a fat or oil composition, comprising the following components (A), (B), and (C1):
(A) a fat or oil in which a content of α-linolenic acid in constituent fatty acids of the fat or oil is from 15 to 60 mass%;
(B) a rosemary extract at a content of from 0.005 to 0.25 mass%; and
(C1) a thyme extract, a basil extract, or a combination thereof at a content of from 0.00001 to 0.0025 mass%.

The present invention provides a fat or oil composition, comprising the following components (A), (B), and (C2):
(A) a fat or oil in which a content of α-linolenic acid in constituent fatty acids of the fat or oil is from 15 to 60 mass%;
(B) a rosemary extract at a content of from 0.005 to 0.25mass%; and
(C2) one or two or more selected from the group consisting of a clove extract, an oregano extract, and a bay laurel extract at a content of from 0.00001 to 0.001 mass%.

### Detailed Description of the Invention

However, the technologies described above have a problem in that degradation odor is liable to be produced because of an insufficient antioxidative property at the time of heating. Also, a plant extract, in particular, a rosemary extract has an excellent antioxidative property but has very strong flavor, and hence original taste and flavor of a cooked food is hardly sensed when a fat or oil containing the rosemary extract is used for cooking. Therefore, the amount of the fat or oil to be added is inevitably restricted, and it is difficult to improve oxidative stability of the fat or oil.

Therefore, the present invention relates to providing a fat or oil composition having high oxidative stability while containing a large amount of α-linolenic acid, and having suppressed degradation odor and unpleasant odor derived from a rosemary extract at the time of cooking.

The inventors of the present invention made intensive investigations. As a result, the inventors found that incorporation of a combination of a rosemary extract and a specific plant extract into a fat or oil was able to impart high oxidative stability, to suppress degradation odor at the time of cooking, and to suppress strong odor derived from rosemary, to thereby provide a fat or oil composition enabling good taste and flavor of a cooked food or the like to be sensed.

According to the present invention, there is provided a fat or oil composition that has high oxidative stability while containing a large amount of α-linolenic acid, has degradation odor and strong unpleasant odor derived from rosemary at the time of cooking both suppressed, and is capable of providing a cooked food excellent in taste and flavor.

The content of a fat or oil as a component (A) of the present invention in the fat or oil composition is preferably from 95 to 99.95 mass% (hereinafter simply referred to as "%"), more preferably from 97 to 99%, from the viewpoint of the use thereof.

In the constituent fatty acids of the fat or oil as the component (A) to be used in the present invention, the content of α-linolenic acid is 15% or more and 60% or less, that is, from 15 to 60%, and is preferably 17% or more, more preferably 20% or more, from the viewpoint of physiological effects. Further, the content of α-linolenic acid is preferably 55% or less, more preferably 50% or less, more preferably 45% or less, more preferably 40% or less, more preferably 30% or less, even more preferably 25% or less, from the viewpoint of oxidative stability. The content of α-linolenic acid in the constituent fatty acids of the fat or oil as the component (A) is preferably from 15 to 50%, more preferably from 15 to 40%, more preferably from 15 to 30%, even more preferably from 15 to 25%, from the viewpoints of both physiological effects and oxidative stability. It should be noted that the amount of a fatty acid herein refers to an amount obtained by converting it to a free fatty acid.

The constituent fatty acids of the fat or oil as the component (A) other than α-linolenic acid are not particularly limited and may be any of saturated fatty acids and unsaturated fatty acids. The ratio of the unsaturated fatty acids in the constituent fatty acids of the fat or oil other than α-linolenic acid is preferably from 60 to 100%, more preferably from 70 to 100%, more preferably from 75 to 100%, even more preferably from 80 to 98%, from the viewpoints of appearance and the industrial productivity of the fat or oil. The carbon numbers of the unsaturated fatty acids are preferably from 14 to 24, more preferably from 16 to 22, from the viewpoint of physiological effects.

In addition, the content of the saturated fatty acids of the constituent fatty acids of the fat or oil as the component (A) is preferably 40% or less, more preferably 30% or less, more preferably 25% or less, even more preferably 20% or less from the viewpoints of appearance and physiological effects. Further, the content is preferably 0.5% or more, from the viewpoint of the industrial productivity of the fat or oil. The carbon numbers of the saturated fatty acids are preferably from14 to 24, more preferably from 16 to 22.

In the present invention, substances constituting the fat or oil as the component (A) include monoacylglycerols and diacylglycerols as well as triacylglycerols. That is, the fat or oil as the component (A) in the present invention contains any one or more of monoacylglycerols, diacylglycerols, and triacylglycerols.

The content of the triacylglycerols in the fat or oil as the component (A) is preferably from 78 to 100%, more preferably from 88 to 100%, more preferably from 90 to 99.5%, even more preferably from 92 to 99%, from the viewpoint of the industrial productivity of the fat or oil.

Further, the content of the diacylglycerols in the fat or oil as the component (A) is preferably 19% or less, more preferably 9% or less, more preferably from 0.1 to 7%, even more preferably from 0.2 to 5%, from the viewpoint of the industrial productivity of the fat or oil. Moreover, the content of the monoacylglycerols in the fat or oil as the component (A) is preferably 3% or less, more preferably from 0 to 2%, from the viewpoint of improvement of taste and flavor.

In addition, the content of a free fatty acid or a salt thereof contained in the fat or oil composition of the present invention is preferably 5% or less, more preferably from 0 to 2%, even more preferably from 0 to 1%, from the viewpoints of the taste and flavor and the industrial productivity of the fat or oil.

An edible fat or oil that may be used as an origin of the fat or oil as the component (A) of the present invention is not particularly limited, and examples thereof may include the following fats or oils: plant-derived fats or oils such as soybean oil, rapeseed oil, safflower oil, rice oil, corn oil, sunflower oil, cotton seed oil, olive oil, sesame oil, peanut oil, Job's tears seed oil, wheat germ oil, Japanese basil oil, linseed oil, perilla oil, sacha inchi oil, walnut oil, kiwi seed oil, salvia seed oil, grape seed oil, macadamia nut oil, hazelnut oil, pumpkin seed oil, camellia oil, tea seed oil, borage oil, palm oil, palm olein, palm stearin, coconut oil, palm kernel oil, cacao fat, sal fat, shea fat, and algae oil; animal-derived fats or oils such as fish oil, lard, beef tallow, and butter fat; and transesterified oils, hydrogenated oils, and fractionated oils thereof, or the like. The oils may each be used singly or may be mixed appropriately before use. Of those, from the viewpoint of usability, plant-derived fats or oils are preferably used, a liquid fat or oil excellent in low-temperature resistance is more preferably used, and one or two or more selected from the group consisting of Japanese basil oil, linseed oil, and perilla oil are even more preferably used because the oils are rich in α-linolenic acid. It should be noted that the liquid fat or oil refers to a fat or oil that stays liquid at 20°C, when determined in accordance with a cold test described in Standard Methods for the Analysis of Fats, Oils and Related Materials 2.3.8-27. In addition, the edible fat or oil is preferably a refined fat or oil obtained by a refinement step.

A rosemary extract as a component (B) to be used in the present invention refers to an extract of rosemary (Japanese name: Mannenrou) belonging to the genus *Rosmarinus* of the family Lamiaceae (*Rosmarinus officinalis L*.). Known varieties of the rosemary include Brenenden Blue, Creeping, Marine Blue, Majolicapink, Tuscan Blue, and Rex, or the like. In the present invention, all of the varieties may be used.

The part of the rosemary to be used for preparing the rosemary extract as the component (B) is not particularly limited, and examples thereof include leaf, stem, germ, flower, branch, root, and seed or the like, and a mixture thereof. The parts maybe subjected to an extraction step without additional treatment, or may be subjected thereto after pulverization, cutting, or drying.

As extraction means for preparing an extract, there may be used any means such as solid-liquid extraction, liquid-liquid extraction, immersion, decoction, leaching, steam distillation, reflux extraction, sonication extraction, microwave extraction, or stirring.

A solvent for extraction is not particularly limited, and examples thereof include: water; steam; an alcohol such as methanol or ethanol; subcritical or supercritical carbon dioxide; an edible fat or oil such as soybean oil, rapeseed oil, sunflower oil, palm oil, or lard; and a mixture thereof.

In addition, as the rosemary extract as the component (B), there may be used a commercially available product, preferably one commercially available as an antioxidant, more preferably one commercially available as an antioxidant for foods and beverages.

The rosemary extract as the component (B) may be a crude product as long as the extract meets the standard acceptable for foods and exerts the effects of the present invention to be exhibited. The resultant crude product may further be purified by using known separation and purification methods in appropriately combination. As purification means, there are given, for example, precipitation with an organic solvent, centrifugation, ultrafiltration, treatment with an adsorbent, high-performance liquid chromatography, and column chromatography.

The content of the rosemary extract as the component (B) in the fat or oil composition is 0.005% or more and 0.25% or less, that is, from 0.005 to 0.25%, and is preferably 0.01% or more, more preferably 0.02% or more, even more preferably 0.03% or more, from the viewpoint of oxidative stability. In addition, the content of the rosemary extract as the component (B) in the fat or oil composition is preferably 0.2% or less, more preferably 0.17% or less, more preferably 0.16% or less, even more preferably 0.15% or less, from the viewpoint of taste and flavor. The content of the rosemary extract as the component (B) in the fat or oil composition is preferably from 0.005 to 0.25%, more preferably from 0.01 to 0.25%, more preferably from 0.01 to 0.2%, more preferably from 0.02 to0.17%, even more preferably from 0.03 to 0.15%, from the viewpoints of both oxidative stability and taste and flavor.

In the case where the content of α-linolenic acid in the constituent fatty acids of the fat or oil as the component (A) is 30% or more, the content of the rosemary extract as the component (B) in the fat or oil composition is preferably from 0.016 to 0.1%.

Further, in the case where the content of α-linolenic acid in the constituent fatty acids of the fat or oil as the component (A) is 40% or more, the content of the rosemary extract as the component (B) in the fat or oil composition is preferably from 0.04 to 0.1%.

In the fat or oil composition of the present invention, a ratio (content mass ratio) of the content of the rosemary extract as the component (B) in the fat or oil composition to the content of α-linolenic acid in the constituent fatty acids of the fat or oil as the component (A), [(B)/(C18:3)], is preferably 0.0002 or more, more preferably 0.0005 or more, more preferably 0.001 or more, even more preferably 0.0015 or more, from the viewpoint of oxidative stability. Further, the ratio is preferably 0.015 or less, more preferably 0.01 or less, from the viewpoint of taste and flavor. The ratio of the content of the rosemary extract as the component (B) in the fat or oil composition to the content of α-linolenic acid in the constituent fatty acids of the fat or oil as the component (A), [(B)/(C18:3)], is preferably from 0.0002 to 0.015, more preferably from 0.0005 to 0.01, more preferably from 0.001 to 0.01, even more preferably from 0.0015 to 0.01, from the viewpoints of both oxidative stability and taste and flavor.

A thyme extract as a component (C1) to be used in the present invention is an extract of *Thymus vulgaris* L. (alias: thyme) belonging to the genus *Thymus.* In addition, a basil extract is an extract of basil (*Ocimum basilicum* L.) belonging to the genus *Ocimum.*

In the present invention, the thyme extract and the basil extract may each be used alone or may be used in combination. Hereinafter, "a thyme extract, a basil extract, or a combination thereof" is sometimes simply referred to as component (C1).

The part of a plant to be used for preparing the component (C1) is not particularly limited, and examples thereof include leaf, stem, germ, flower, branch, root, fruit, and seed or the like, and a mixture thereof. The parts may be subjected to an extraction step without additional treatment, or may be subjected thereto after pulverization, cutting, or drying.

Extraction means for preparing the component (C1), a purification method for a solvent for extraction, and the like are the same as those of the rosemary extract as the component (B).

In addition, as the component (C1), there may be used a commercially available product, preferably one commercially available as a product for foods.

A content of the component (C1) in the fat or oil composition is 0.00001% or more and 0.0025% or less, that is, from 0.00001 to 0.0025%, and is preferably 0.00002% or more, more preferably 0.00004% or more, more preferably 0.0001% or more, even more preferably 0.0002% or more, from the viewpoint of suppression of odor derived from the rosemary extract. In addition, the content of the component (C1) in the fat or oil composition is preferably 0.002% or less, more preferably 0.0018% or less, more preferably 0.0015% or less, more preferably 0.0012% or less, more preferably 0.0009% or less, even more preferably 0.0007% or less, from the viewpoint of taste and flavor. The content of the component (C1) is preferably from 0.00001 to 0.002%, more preferably from 0.00002 to 0.002%, more preferably from 0.00002 to 0.0018%, more preferably from 0.00002 to 0.0015%, more preferably from 0.00002 to 0.0009%, more preferably from 0.00002 to 0.0007%, more preferably from 0.00004 to 0.0007%, more preferably from 0.0001 to 0.0007%, even more preferably from 0.0002 to 0.0007%, from the viewpoints of both suppression of odor derived from the rosemary extract, and taste and flavor.

In the case where the content of α-linolenic acid in the constituent fatty acids of the fat or oil as the component (A) is 30% or more, further 40% or more, the content of the component (C1) in the fat or oil composition is preferably 0.0001% or more.

It should be noted that in the present invention, the rosemary extract as the component (B), and the thyme extract and the basil extract as the component (C1) may have a purity of about 100% or may be diluted with a solvent used for extraction. The content of the rosemary extract as the component (B) or the content of the component (C1) in the present invention is determined based on the mass of a pure substance containing no solvent.

In the fat or oil composition of the present invention, the ratio (content mass ratio) of the content of the component (C1) to the content of the component (B), [(C1)/(B)], is preferably 0.0003 or more, more preferably 0.0004 or more, more preferably 0.001 or more, even more preferably 0.002 or more, from the viewpoint of suppression of odor derived from the rosemary extract, and the ratio is preferably 0.08 or less, more preferably 0.05 or less, more preferably 0.03 or less, more preferably 0.019 or less, more preferably 0.018 or less, even more preferably 0.017 or less, from the viewpoints of suppression of odor derived from the component (C1), and taste and flavor. Further, in the fat or oil composition, the ratio of the content of the component (C1) to the content of the component (B), [(C1)/(B)], is preferably from 0.0003 to 0.08, more preferably from 0.0004 to 0.05, more preferably from 0.0004 to 0.03, more preferably from 0.001 to 0.03, more preferably from 0.002 to 0.03, more preferably from 0.002 to 0.019, more preferably from 0.002 to 0.018, even more preferably from 0.002 to 0.017, from the viewpoints of both suppression of odor derived from the component (C1), taste and flavor, and suppression of odor derived from the rosemary extract.

A clove extract as a component (C2) to be used in the present invention is an extract of a clove (*Syzygium aromaticum* L.), which belongs to the genus *Eugenia* of the family Myrtaceae. Further, an oregano extract is an extract of an oregano (*Origanum vulgare* L.), which belongs to the genus *Origanum* of the family Lamiaceae. Further, a bay laurel extract is an extract of a bay laurel (*Laurus nobilis* L.), which belongs to the genus *Laurus* of the family Lauraceae.

In the present invention, one selected from the group consisting of the clove extract, the oregano extract, and the bay laurel extract may be used alone or two or more thereof may be used in combination. Hereinafter, "one or two or more selected from the group consisting of a clove extract, an oregano extract, and a bay laurel extract" are sometimes simply referred to as component (C2).

Further, in the present invention, two or more selected from the group consisting of the thyme extract, the basil extract, the clove extract, the oregano extract, and the bay laurel extract may be used in combination.

The part of a plant to be used for preparing the component (C2) is not particularly limited, and examples thereof include leaf, stem, germ, flower, branch, root, fruit, and seed or the like, and a mixture thereof. The parts may be subjected to an extraction step without additional treatment, or may be subjected thereto after pulverization, cutting, or drying.

Extraction means for preparing the component (C2), a purification method for a solvent for extraction, and the like are the same as those of the rosemary extract as the component (B).

In addition, as the component (C2), there may be used a commercially available product, preferably one commercially available as a product for foods.

A content of the component (C2) in the fat or oil composition is 0.00001% or more and 0.001% or less, that is, from 0.00001 to 0.001%, and is preferably 0.00002% or more, more preferably 0.00005% or more, even more preferably 0.0001% or more, from the viewpoint of suppression of odor derived from the rosemary extract. In addition, the content of the component (C2) in the fat or oil composition is preferably 0.0009% or less, more preferably 0.0008% or less, even more preferably 0.0005% or less, from the viewpoint of taste and flavor. The content of the component (C2) is preferably from 0.00001 to 0.0009%, more preferably from 0.00002 to 0.0009%, more preferably from 0.00002 to 0.0008%, more preferably from 0.00005 to 0.0005%, even more preferably from 0.0001 to 0.0005%, from the viewpoints of both suppression of odor derived from the rosemary extract, and taste and flavor.

Further, the content of the clove extract in the fat or oil composition is preferably from 0.00001 to 0.0009%, more preferably from 0.00002 to 0.0008%, even more preferably from 0.00005 to 0.0005%, from the viewpoints of both suppression of odor derived from the rosemary extract, and taste and flavor.

Further, the content of the oregano extract in the fat or oil composition is preferably from 0.0001 to 0.0009%, more preferably from 0.0001 to 0.0005%, even more preferably from 0.0001 to 0.0003%, from the viewpoints of both suppression of odor derived from the rosemary extract, and taste and flavor.

Further, the content of the bay laurel extract in the fat or oil composition is preferably from 0.0001 to 0.0009%, more preferably from 0.0001 to 0.0005%, even more preferably from 0.0001 to 0.0003%, from the viewpoints of both suppression of odor derived from the rosemary extract, and taste and flavor.

In the case where the content of α-linolenic acid in the constituent fatty acids of the fat or oil as the component (A) is 30% or more, further 40% or more, the content of the component (C2) in the fat or oil composition is preferably 0.0001% or more.

It should be noted that in the present invention, the clove extract, oregano extract, and bay laurel extract as the component (C2) may have a purity of about 100% or may be diluted with a solvent used for extraction. The content of the component (C2) in the present invention is determined based on the mass of a pure substance containing no solvent.

In the fat or oil composition of the present invention, a ratio (content mass ratio) of the content of the component (C2) to the content of the component (B), [(C2)/(B)], is preferably 0.0001 or more, more preferably 0.0004 or more, even more preferably 0.001 or more, from the viewpoint of suppression of odor derived from the rosemary extract, and the ratio is preferably 0.03 or less, more preferably 0.019 or less, more preferably 0.018 or less, even more preferably 0.007 or less, from the viewpoints of suppression of odor derived from the component (C2), and taste and flavor. Further, in the fat or oil composition, the ratio of the content of the component (C2) to the content of the component (B), [(C2)/(B)], is preferably from 0.0001 to 0.03, more preferably from 0.0001 to 0.018, even more preferably from 0.001 to 0.007, from the viewpoints of both suppression of odor derived from the component (C2), taste and flavor, and suppression of odor derived from the rosemary extract.

In addition, the fat or oil composition of the present invention contains preferably 0.01 to 0.2%, more preferably 0.02 to 0.1% of an antioxidant other than the component (B) and the components (C1) and (C2) in the fat or oil composition, from the viewpoint of oxidative stability at the time of each of storage and cooking. Examples of the antioxidant include a natural antioxidant, a tocopherol, and an ascorbic acid ester or the like. Of those, one or two or more of antioxidants selected from the group consisting of a natural antioxidant, a tocopherol, and ascorbyl palmitate are preferably used, and a combination of ascorbyl palmitate and a tocopherol is more preferably used.

The fat or oil composition of the present invention can be obtained by, for example, adding the components (B), (C1), and (C2), and other components, if necessary, to the fat or oil as the component (A) and optionally, for example, heating and stirring the resultant mixture.

Such fat or oil composition can be used in the same manner as a general edible fat or oil, and can be applied to a variety of foods and beverages including the fat or oil. In particular, the fat or oil composition is used suitably as a fat or oil for cooking, more suitably as a fat or oil for cooking of a deep-fried food such as fry or tempura, a sauteed food, or a grilled food.

In relation to the above-mentioned embodiments, the present invention discloses the following fat or oil compositions or uses.
<1> A fat or oil composition, comprising the following components (A), (B), and (C1):
   (A) a fat or oil in which a content of α-linolenic acid in constituent fatty acids of the fat or oil is from 15 to 60 mass%;
   (B) a rosemary extract at a content of from 0.005 to 0.25mass%; and
   (C1) a thyme extract, a basil extract, or a combination thereof at a content of from 0.00001 to 0.0025 mass%.
<2> The fat or oil composition according to the above-mentioned item <1>, in which the content of α-linolenic acid in the constituent fatty acids of the fat or oil as the component (A) is 15 mass% or more, more preferably 17 mass% or more, even more preferably 20 mass% or more.
<3> The fat or oil composition according to the above-mentioned item <1> or <2>, in which the content of α-linolenic acid in the constituent fatty acids of the fat or oil as the component (A) is 60 mass% or less, more preferably 55 mass% or less, more preferably 50 mass% or less, more preferably 45 mass% or less, more preferably 40 mass% or less, more preferably 30 mass% or less, even more preferably 25 mass% or less.
<4> The fat or oil composition according to the above-mentioned item <1>, in which the content of α-linolenic acid in the constituent fatty acids of the fat or oil as the component (A) is preferably from 15 to 50 mass%, more preferably from 15 to 40 mass%, more preferably from 15 to 30 mass%, even more preferably from 15 to 25 mass%.
<5> The fat or oil composition according to any one of the above-mentioned items <1> to <4>, in which the component (A) preferably includes one or two or more of fats or oils selected from the group consisting of linseed oil, Japanese basil oil, and perilla oil.
<6> The fat or oil composition according to any one of the above-mentioned items <1> to <5>, in which the content of the rosemary extract as the component (B) is 0.005 mass% or more, more preferably 0.01 mass% or more, more preferably 0.02 mass% or more, even more preferably 0.03 mass% or more.
<7> The fat or oil composition according to any one of the above-mentioned items <1> to <6>, in which the content of the rosemary extract as the component (B) is 0.25 mass% or less, more preferably 0.2 mass% or less, more preferably 0.17 mass% or less, more preferably 0.16 mass% or less, even more preferably 0.15 mass% or less.
<8> The fat or oil composition according to any one of the above-mentioned items <1> to <5>, in which the content of the rosemary extract as the component (B) is preferably from 0.01 to 0.25 mass%, more preferably from 0.01 to 0.2 mass%, more preferably from 0.02 to 0.17 mass%, even more preferably from 0.03 to 0.15 mass%.
<9> The fat or oil composition according to any one of the above-mentioned items <1> to <8>, in which the ratio (content mass ratio) of the content of the rosemary extract as the component (B) in the fat or oil composition to the content of α-linolenic acid in the constituent fatty acids of the fat or oil as the component (A), [(B)/(C18:3)], is preferably 0.0002 or more, more preferably 0.0005 or more, more preferably 0.001 or more, even more preferably 0.0015 or more.
<10> The fat or oil composition according to any one of the above-mentioned items <1> to <9>, in which the ratio (content mass ratio) of the content of the rosemary extract as the component (B) in the fat or oil composition to the content of α-linolenic acid in the constituent fatty acids of the fat or oil as the component (A), [(B)/(C18:3)], is preferably 0.015 or less, more preferably 0.01 or less.
<11> The fat or oil composition according to any one of the above-mentioned items <1> to <8>, in which the ratio (content mass ratio) of the content of the rosemary extract as the component (B) in the fat or oil composition to the content of α-linolenic acid in the constituent fatty acids of the fat or oil as the component (A), [(B)/(C18:3)], is preferably from 0.0002 to 0.015, more preferably from 0.0005 to 0.01, more preferably from 0.001 to 0.01, even more preferably from 0.0015 to 0.01.
<12> The fat or oil composition according to any one of the above-mentioned items <1> to <11>, in which the content of the component (C1) is 0.00001 mass% or more, more preferably 0.00002 mass% or more, more preferably 0.00004 mass% or more, more preferably 0.0001 mass% or more, even more preferably 0.0002 mass% or more.
<13> The fat or oil composition according to any one of the above-mentioned items <1> to <12>, in which the content of the component (C1) is 0.0025 mass% or less, more preferably 0.002 mass% or less, more preferably 0.0018 mass% or less, more preferably 0.0015 mass% or less, more preferably 0.0012 mass% or less, more preferably 0.0009 mass% or less, even more preferably 0.0007 mass% or less.
<14> The fat or oil composition according to any one of the above-mentioned items <1> to <11>, in which the content of the component (C1) is preferably from 0.00001 to 0.002 mass%, more preferably from 0.00002 to 0.002 mass%, more preferably from 0.00002 to 0.0018 mass%, more preferably from 0.00002 to 0.0015mass%, more preferably from 0.00002 to 0.0009mass%, more preferably from 0.00002 to 0.0007 mass%, more preferably from 0.00004 to 0.0007 mass%, more preferably from 0.0001 to 0.0007 mass%, even more preferably from 0.0002 to 0.0007 mass%.
<15> The fat or oil composition according to any one of the above-mentioned items <1> to <14>, in which the ratio (content mass ratio) of the content of the component (C1) to the content of the component (B), [(C1)/(B)], is preferably 0.0003 or more, more preferably 0.0004 or more, more preferably 0.001 or more, even more preferably 0.002 or more.
<16> The fat or oil composition according to any one of the above-mentioned items <1> to <15>, in which the ratio (content mass ratio) of the content of the component (C1) to the content of the component (B), [(C1)/(B)], is preferably 0.08 or less, more preferably 0.05 or less, more preferably 0.03 or less, more preferably 0.019 or less, more preferably 0.018 or less, even more preferably 0.017 or less.
<17> The fat or oil composition according to any one of the above-mentioned items <1> to <14>, in which the ratio (content mass ratio), [(C1)/(B)], of the content of the component (C1) to the content of the component (B) is preferably from 0.0003 to 0.08, more preferably from 0.0004 to 0.05, more preferably from 0.0004 to 0.03, more preferably from 0.001 to 0.03, more preferably from 0.002 to 0.03, more preferably from 0.002 to 0.019, more preferably from 0.002 to 0.018, even more preferably from 0.002 to 0.017.
<18> A fat or oil composition, comprising the following components (A), (B), and (C2):
   (A) a fat or oil in which a content of α-linolenic acid in constituent fatty acids of the fat or oil is from 15 to 60 mass%;
   (B) a rosemary extract at a content of from 0.005 to 0.25 mass%; and
   (C2) one or two or more selected from the group consisting of a clove extract, an oregano extract, and a bay laurel extract at a content of from 0.00001 to 0.001 mass%.
<19> The fat or oil composition according to the above-mentioned item <18>, in which the content of α-linolenic acid in the constituent fatty acids of the fat or oil as the component (A) is 15 mass% or more, more preferably 17 mass% or more, even more preferably 20 mass% or more.
<20> The fat or oil composition according to the above-mentioned item <18> or <19>, in which the content of α-linolenic acid in the constituent fatty acids of the fat or oil as the component (A) is 60 mass% or less, more preferably 55 mass% or less, more preferably 50 mass% or less, more preferably 45 mass% or less, more preferably 40 mass% or less, more preferably 30 mass% or less, even more preferably 25 mass% or less.
<21> The fat or oil composition according to the above-mentioned item <18>, in which the content of α-linolenic acid in the constituent fatty acids of the fat or oil as the component (A) is preferably from 15 to 50 mass%, more preferably from 15 to 40 mass%, more preferably from 15 to 30 mass%, even more preferably from 15 to 25 mass%.
<22> The fat or oil composition according to any one of the above-mentioned items <18> to <21>, in which the component (A) preferably includes one or two or more of fats or oils selected from the group consisting of linseed oil, Japanese basil oil, and perilla oil.
<23> The fat or oil composition according to any one of the above-mentioned items <18> to <22>, in which the content of the rosemary extract as the component (B) is 0.01 mass% or more, more preferably 0.02 mass% or more, even more preferably 0.03 mass% or more.
<24> The fat or oil composition according to any one of the above-mentioned items <18> to <23>, in which the content of the rosemary extract as the component (B) is 0.25 mass% or less, more preferably 0.2 mass% or less, more preferably 0.17 mass% or less, more preferably 0.16 mass% or less, even more preferably 0.15 mass% or less.
<25> The fat or oil composition according to any one of the above-mentioned items <18> to <22>, in which the content of the rosemary extract as the component (B) is preferably from 0.01 to 0.25 mass%, more preferably from 0.01 to 0.2 mass%, more preferably from 0.02 to 0.17 mass%, even more preferably from 0.03 to 0.15 mass%.
<26> The fat or oil composition according to any one of the above-mentioned items <18> to <25>, in which the ratio (content mass ratio) of the content of the rosemary extract as the component (B) in the fat or oil composition to the content of α-linolenic acid in the constituent fatty acids of the fat or oil as the component (A), [(B)/(C18:3)], is preferably 0.0002 or more, more preferably 0.0005 or more, more preferably 0.001 or more, even more preferably 0.0015 or more.
<27> The fat or oil composition according to any one of the above-mentioned items <18> to <26>, in which the ratio (content mass ratio) of the content of the rosemary extract as the component (B) in the fat or oil composition to the content of α-linolenic acid in the constituent fatty acids of the fat or oil as the component (A), [(B)/(C18:3)], is preferably 0.015 or less, more preferably 0.01 or less.
<28> The fat or oil composition according to any one of the above-mentioned items <18> to <25>, in which the ratio (content mass ratio) of the content of the rosemary extract as the component (B) in the fat or oil composition to the content of α-linolenic acid in the constituent fatty acids of the fat or oil as the component (A), [(B)/(C18:3)], is preferably from 0.0002 to 0.015, more preferably from 0.0005 to 0.01, more preferably from 0.001 to 0.01, even more preferably from 0.0015 to 0.01.
<29> The fat or oil composition according to any one of the above-mentioned items <18> to <28>, in which the content of the component (C2) is 0.00001 mass% or more, more preferably 0.00002 mass% or more, more preferably 0.00005 mass% or more, even more preferably 0.0001 mass% or more.
<30> The fat or oil composition according to any one of the above-mentioned items <18> to <29>, in which the content of the component (C2) is preferably 0.0009 mass% or less, more preferably 0.0008 mass% or less, even more preferably 0.0005 mass% or less.
<31> The fat or oil composition according to any one of the above-mentioned items <18> to <28>, in which the content of the component (C2) is preferably from 0.00001 to 0.0009 mass%, more preferably from 0.00002 to 0.0009 mass%, more preferably from 0.00002 to 0.0008 mass%, more preferably from 0.00005 to 0.0005 mass%, even more preferably from 0.0001 to 0.0005 mass%.
<32> The fat or oil composition according to any one of the above-mentioned items <18> to <31>, in which the ratio (content mass ratio) of the content of the component (C2) to the content of the component (B), [(C2)/(B)], is preferably 0.0001 or more, more preferably 0.0004 or more, even more preferably 0.001 or more.
<33> The fat or oil composition according to any one of the above-mentioned items <18> to <32>, in which the ratio (content mass ratio) of the content of the component (C2) to the content of the component (B), [(C2)/(B)], is preferably 0.03 or less, more preferably 0.019 or less, more preferably 0.018 or less, even more preferably 0.007 or less.
<34> The fat or oil composition according to any one of the above-mentioned items <18> to <31>, in which the ratio (content mass ratio) of the content of the component (C2) to the content of the component (B), [(C2)/(B)], is preferably from 0.0001 to 0.03, more preferably from 0.0001 to 0.018, even more preferably from 0.001 to 0.007.
<35> The fat or oil composition according to any one of the above-mentioned items <1> to <34>, in which the fat or oil composition comprises preferably 95 to 99.95 mass%, more preferably 97 to 99 mass% of the fat or oil as the component (A).
<36> The fat or oil composition according to any one of the above-mentioned items <1> to <35>, in which the content of triacylglycerols in the fat or oil as the component (A) is preferably from 78 to 100 mass%, more preferably from 88 to 100 mass%, more preferably from 90 to 99.5 mass%, even more preferably from 92 to 99 mass%.
<37> The fat or oil composition according to any one of the above-mentioned items <1> to <36>, in which a ratio of unsaturated fatty acids in the constituent fatty acids of the fat or oil as the component (A) other than α-linolenic acid is preferably from 60 to 100 mass%, more preferably from 70 to 100 mass%, more preferably from 75 to 100 mass%, even more preferably from 80 to 98 mass%.
<38> The fat or oil composition according to any one of the above-mentioned items <1> to <37>, further comprising preferably one or two or more of antioxidants selected from the group consisting of a natural antioxidant, a tocopherol, and an ascorbic acid ester, more preferably one or two or more of antioxidants selected from the group consisting of a natural antioxidant, a tocopherol, and ascorbyl palmitate, even more preferably ascorbyl palmitate and a tocopherol as antioxidants.
<39> The fat or oil composition according to the above-mentioned item <38>, in which the content of the antioxidant is preferably from 0.01 to 0.2 mass%, more preferably from 0.02 to 0.1 mass%.
<40> The fat or oil composition according to any one of the above-mentioned items <1> to <39>, in which the rosemary extract as the component (B) is preferably an extract obtained from one or two or more of parts selected from the group consisting of leaf, stem, germ, flower, branch, root, and seed of rosemary.
<41> The fat or oil composition according to any one of the above-mentioned items <1> to <39>, in which the rosemary extract as the component (B) is preferably one extracted with one or two or more of solvents selected from the group consisting of water, steam, an alcohol, subcritical or supercritical carbon dioxide, and an edible fat or oil.
<42> The fat or oil composition according to the above-mentioned item <41>, in which the alcohol is preferably one or two or more selected from the group consisting of methanol and ethanol, and the edible fat or oil is preferably one or two or more selected from the group consisting of soybean oil, rapeseed oil, sunflower oil, palm oil, and lard.
<43> The fat or oil composition according to any one of the above-mentioned items <1> to <42>, in which each of the extracts as the component (C1) and the component (C2) is preferably an extract obtained from one or two or more of parts selected from the group consisting of leaf, stem, germ, flower, branch, root, and seed of thyme, basil, clove, oregano, or bay laurel.
<44> The fat or oil composition according to any one of the above-mentioned items <1> to <43>, in which each of the extracts as the component (C1) and the component (C2) is preferably one extracted with one or two or more of solvents selected from the group consisting of water, steam, an alcohol, subcritical or supercritical carbon dioxide, and an edible fat or oil.
<45> The fat or oil composition according to the above-mentioned item <44>, in which the alcohol is preferably one or two or more selected from the group consisting of methanol and ethanol, and the edible fat or oil is preferably one or two or more selected from the group consisting of soybean oil, rapeseed oil, sunflower oil, palm oil, and lard.
<46> The fat or oil composition according to any one of the above-mentioned items <1> to <45>, in which the rosemary extract as the component (B) is preferably a commercially available product, more preferably one commercially available as an antioxidant, even more preferably one commercially available as an antioxidant for foods and beverages.
<47> The fat or oil composition according to any one of the above-mentioned items <1> to <46>, in which each of the extracts as the component (C1) and the component (C2) is preferably a commercially available product, more preferably one commercially available as a product for foods.
<48> Use of the fat or oil composition according to any one of the above-mentioned items <1> to <47> as an edible fat or oil.
<49> The use according to the above-mentioned item <48> as a fat or oil for cooking.
<50> The use according to the above-mentioned item <48> as a fat or oil for cooking of a deep-fried food, a sauteed food, or a grilled food.
<51> A method of improving oxidative stability of a fat or oil composition, comprising blending a rosemary extract as a component (B) and a thyme extract, a basil extract, or a combination thereof as a component (C1) into a fat or oil composition containing, as a component (A), a fat or oil in which a content of α-linolenic acid in constituent fatty acids of the fat or oil is from 15 to 60 mass%, so that the content of the rosemary extract as the component (B) is from 0.005 to 0.25 mass% and the content of the thyme extract, the basil extract, or the combination thereof as the component (C1) is from 0.00001 to 0.0025 mass%.
<52> The method of improving oxidative stability of a fat or oil composition according to the above-mentioned item <51>, comprising blending the rosemary extract as the component (B) into the fat or oil composition, so that the ratio (content mass ratio) of the content of the rosemary extract as the component (B) in the fat or oil composition to the content of α-linolenic acid in the constituent fatty acids of the fat or oil as the component (A) in the fat or oil composition, [(B)/(C18:3)], is preferably 0.0002 or more, more preferably 0.0005 or more, more preferably 0.001 or more, even more preferably 0.0015 or more, is preferably 0.015 or less, more preferably 0.01 or less, and is preferably from 0.0002 to 0.015, more preferably from 0.0005 to 0.01, more preferably from 0.001 to 0.01, even more preferably from 0.0015 to 0.01.
<53> The method of improving oxidative stability of a fat or oil composition according to the above-mentioned item <51> or <52>, comprising blending the rosemary extract as the component (B) and the thyme extract, the basil extract, or the combination thereof as the component (C1) into the fat or oil composition, so that the ratio (content mass ratio) of the content of the component (C1) in the fat or oil composition to the content of the component (B) in the fat or oil composition, [(C1)/(B)], is preferably 0.0003 or more, more preferably 0.0004 or more, more preferably 0.001 or more, even more preferably 0.002 or more, is preferably 0.08 or less, more preferably 0.05 or less, more preferably 0.03 or less, more preferably 0.019 or less, more preferably 0.018 or less, even more preferably 0.017 or less, and is preferably from 0.0003 to 0.08, more preferably from 0.0004 to 0.05, more preferably from 0.0004 to 0.03, more preferably from 0.001 to 0.03, more preferably from 0.002 to 0.03, more preferably from 0.002 to 0.019, more preferably from 0.002 to 0.018, even more preferably from 0.002 to 0.017.
<54> A method of improving oxidative stability of a fat or oil composition, comprising blending a rosemary extract as a component (B) and one or two or more, as a component (C2), selected from the group consisting of a clove extract, an oregano extract, and a bay laurel extract into a fat or oil composition containing, as a component (A), a fat or oil in which a content of α-linolenic acid in constituent fatty acids of the fat or oil is from 15 to 60 mass%, so that the content of the rosemary extract as the component (B) is from 0.005 to 0.25 mass% and the content of the one or two or more, as the component (C2), selected from the clove extract, the oregano extract, and the bay laurel extract is from 0.00001 to 0.001 mass%.
<55> The method of improving oxidative stability of a fat or oil composition according to the above-mentioned item <54>, comprising blending the rosemary extract as the component (B) into the fat or oil composition, so that the ratio (content mass ratio) of the content of the rosemary extract as the component (B) in the fat or oil composition to the content of α-linolenic acid in the constituent fatty acids of the fat or oil as the component (A) in the fat or oil composition, [(B)/(C18:3)], is preferably 0.0002 or more, more preferably 0.0005 or more, more preferably 0.001 or more, even more preferably 0.0015 or more, is preferably 0.015 or less, more preferably 0.01 or less, and is preferably from 0.0002 to 0.015, more preferably from 0.0005 to 0.01, more preferably from 0.001 to 0.01, even more preferably from 0.0015 to 0.01.
<56> The method of improving oxidative stability of a fat or oil composition according to the above-mentioned item <54> or <55>, comprising blending the rosemary extract as the component (B) and the one or two or more, as the component (C2), selected from the group consisting of the clove extract, the oregano extract, and the bay laurel extract into the fat or oil composition, so that the ratio (content mass ratio) of the content of the component (C2) in the fat or oil composition to the content of the component (B) in the fat or oil composition, [(C2)/(B)], is preferably 0.0001 or more, more preferably 0.0004 or more, even more preferably 0.001 or more, is preferably 0.03 or less, more preferably 0.019 or less, more preferably 0.018 or less, even more preferably 0.007 or less, and is preferably from 0.0001 to 0.03, more preferably from 0.0001 to 0.018, even more preferably from 0.001 to 0.007.
<57> A method of suppressing odor of a rosemary extract as a component (B), comprising blending a thyme extract, a basil extract, or a combination thereof as a component (C1) into a fat or oil composition containing the rosemary extract as the component (B) at a content of from 0.005 to 0.25 mass% and containing, as a component (A), a fat or oil in which a content of α-linolenic acid in constituent fatty acids of the fat or oil is from 15 to 60 mass%, so that the content of the thyme extract, the basil extract, or the combination thereof as the component (C1) is from 0.00001 to 0.0025 mass%.
<58> The method of suppressing odor of a rosemary extract as a component (B) according to the above-mentioned item <57>, comprising blending the thyme extract, the basil extract, or the combination thereof as the component (C1) into the fat or oil composition, so that the ratio (content mass ratio) of the content of the component (C1) in the fat or oil composition to the content of the component (B) in the fat or oil composition, [(C1)/(B)], is preferably 0.0003 or more, more preferably 0.0004 or more, more preferably 0.001 or more, even more preferably 0.002 or more, is preferably 0.08 or less, more preferably 0.05 or less, more preferably 0.03 or less, more preferably 0.019 or less, more preferably 0.018 or less, even more preferably 0.017 or less, and is preferably from 0.0003 to 0.08, more preferably from 0.0004 to 0.05, more preferably from 0.0004 to 0.03, more preferably from 0.001 to 0.03, more preferably from 0.002 to 0.03, more preferably from 0.002 to 0.019, more preferably from 0.002 to 0.018, even more preferably from 0.002 to 0.017.
<59> A method of suppressing odor of a rosemary extract as a component (B), comprising blending one or two or more, as a component (C2), selected from the group consisting of a clove extract, an oregano extract, and a bay laurel extract into a fat or oil composition containing the rosemary extract as the component (B) at a content of from 0.005 to 0.25 mass% and containing, as a component (A), a fat or oil in which a content of α-linolenic acid in constituent fatty acids of the fat or oil is from 15 to 60 mass%, so that the content of the one or two or more, as the component (C2), selected from the group consisting of the clove extract, the oregano extract, and the bay laurel extract is from 0.00001 to 0.001 mass%.
<60> The method of suppressing odor of a rosemary extract as a component (B) according to the above-mentioned item <59>, comprising blending the one or two or more, as the component (C2), selected from the group consisting of the clove extract, the oregano extract, and the bay laurel extract into the fat or oil composition, so that the ratio (content mass ratio) of the content of the component (C2) in the fat or oil composition to the content of the component (B) in the fat or oil composition, [(C2)/(B)], is preferably 0.0001 or more, more preferably 0.0004 or more, even more preferably 0.001 or more, is preferably 0.03 or less, more preferably 0.019 or less, more preferably 0.018 or less, even more preferably 0.007 or less, and is preferably from 0.0001 to 0.03, more preferably from 0.0001 to 0.018, more preferably from 0.001 to 0.007.

### Examples

### (Analysis Methods)

### (1) Composition of Glycerides in Fat or oil

About 10 mg of a fat or oil sample and 0.5 mL of a trimethylsilylating agent ("Silylating agent TH," manufactured by Kanto Chemical Co., Inc.) were placed in a glass sample bottle, and the bottle was sealed and heated at 70°C for 15 minutes. 1.0 mL of water and 1.5 mL of hexane were added thereto, and the bottle was shaken. The bottle was allowed to stand still, and then the upper layer was analyzed by gas-liquid chromatography (GLC).

### <GLC Analysis Conditions>

### (Conditions)

Apparatus: Agilent 6890 Series (manufactured by Agilent Technologies)
Integrator: ChemStation B.02.01 SR2 (manufactured by Agilent Technologies)
Column: DB-1ht (manufactured by Agilent J&W)
Carrier gas: 1.0 mL He/min
Injector: Split (1:50), T=320°C
Detector: FID, T=350°C
Oven temperature: The temperature was raised from 80°C to 340°C at 10°C/min, and kept for 15 minutes.

### (2) Composition of Constituent Fatty Acids in Fat or oil

Fatty acid methyl esters were prepared in accordance with "Preparation method for fatty acid methyl ester (2.4.1.-1996)" described in "Standard Methods for the Analysis of Fats, Oils and Related Materials" edited by Japan Oil Chemists' Society, and the resultant fat or oil samples were subjected to measurement in accordance with American Oil Chemists. Society Official Method Ce 1f-96 (GLC method).

### <GLC Analysis Conditions>

Column: CP-SIL88 100 m×0.25 mm×0.2 µm (VARIAN)
Carrier gas: 1.0 mL He/min
Injector: Split (1:200), T=250°C
Detector: FID, T=250°C
Oven temperature: The temperature was kept at 174°C for 50 minutes, raised to 220°C at 5°C/min, and kept for 25 minutes.

### (Raw Materials)

Fats or oils having the compositions shown in Table 1 (fat or oil a: refined linseed oil (manufactured by Summit Oil Mill Co., Ltd.) and a fat or oil b: rapeseed salad oil (manufactured by The Nisshin OilliO Group, Ltd.)) were used as the fats or oils a and b as the component (A).

Preparations (RME-1 and RME-2, and SE-1 to SE-4) shown in Table 2 were used as the rosemary extract as the component (B), the thyme extract as the component (C1), and the basil extract as the component (C1) .

Preparations (OE-1 to OE-5) shown in Table 3 were used as the clove extract, the oregano extract, and the bay laurel extract as the component (C2).

**[Table 1]**

| | Fatty acid composition (mass%) | | | | | | | | | | Glyceride composition (mass%) | | | |
|---|---|---|---|---|---|---|---|---|---|---|---|---|---|---|
| | C16:0 | C16:1 | C18:0 | C18:1 | C18:2 | C18:3 | C20:0 | C20:1 | C22:0 | C22:1 | FFA | MAG | DAG | TAG |
| Fat or oil a | 5.06 | 0.06 | 3.31 | 19.52 | 15.96 | 54.63 | 0.13 | 0.78 | 0.12 | 0.07 | 0.03 | 0.00 | 2.63 | 97.35 |
| Fat or oil b | 4.05 | 0.21 | 1.75 | 61.50 | 19.79 | 10.18 | 0.60 | 1.15 | 0.23 | 0.05 | 0.03 | 0.00 | 1.58 | 98.40 |

| | | | | | | | | | | | | | | |
|---|---|---|---|---|---|---|---|---|---|---|---|---|---|---|
| MAG: Monoacylglycerol DAG: Diacylglycerol TAG: Triacylglycerol FFA: Free fatty acid | | | | | | | | | | | | | | |

**[Table 2]**

| | Abbreviated name | Company name | Name | Content of extract in preparation [mass%] |
|---|---|---|---|---|
| Rosemary extract | RME-1 | KALSEC | Herbalox HT-O | 40 |
| | RME-2 | Mitsubishi-Kagaku Foods Corporation | RM Keeper OS | 20 |
| Thyme extract | SE-1 | Ogawa & Co., Ltd. | Spice OG Thyme | 10 |
| | SE-2 | T. HASEGAWA CO., LTD. | Thyme Flavor FH-3910 | 5 |
| Basil extract | SE-3 | Ogawa & Co., Ltd. | Spice OG Basil | 10 |
| | SE-4 | T. HASEGAWA CO., LTD. | Basil Flavor FH-4346 | 1 |

**[Table 3]**

| | Abbreviated name | Company name | Name | Content of extract in preparation [mass%] |
|---|---|---|---|---|
| Clove extract | OE-1 | Ogawa & Co., Ltd. | Spice OG Clove | 10 |
| | OE-2 | T. HASEGAWA CO., LTD. | Clove Flavor FH-4345 | 5 |
| Oregano extract | OE-3 | T. HASEGAWA CO., LTD. | Oregano Flavor FH-3909 | 5 |
| Bay laurel extract | OE-4 | Ogawa & Co., Ltd. | Spice OG Laurel | 10 |
| | OE-5 | T. HASEGAWA CO., LTD. | Laurel Flavor FH-3912 | 3 |

### Examples 1 to 11 and Comparative Examples 1 to 5

### (Preparation of Fat or oil Compositions)

The fat or oil a, the fat or oil b, the rosemary extract (RME-1), the thyme extract (SE-1), the basil extract (SE-3), and mixed tocopherols (manufactured by Archer Daniels Midland) were mixed to prepare fat or oil compositions, respectively. The contents of α-linolenic acid (C18:3) in constituent fatty acids of the fats or oils in the fat or oil compositions (total amount: 100 mass%), and the contents of the rosemary extract, the contents of the thyme extract, the contents of the basil extract, and the contents of the mixed tocopherols in the fat or oil compositions are as shown in Table 4. It should be noted that the blending amounts of the rosemary extract, the thyme extract, and the basil extract in the preparations were determined from the contents of the extracts in the preparations shown in Table 2 so as to achieve the contents shown in Table 4.

### (Evaluation of Oxidative Stability)

The fat or oil compositions shown in Table 4 were used to evaluate oxidative stability. The oxidative stability was evaluated in accordance with "CDM test (2.5.1.2-1996)" described in "Standard Methods for the Analysis of Fats, Oils and Related Materials" edited by Japan Oil Chemists' Society by calculating induction time (hr), and the results were each represented as an oxidative stability index (OSI). The results are shown in Table 4.

### (Thin Film Heating Test)

The fat or oil compositions shown in Table 4 were subjected to a thin film heating test. In the thin film heating test, 3 g of each of the fat or oil compositions was added to a stainless-steel petri dish with a diameter of 6 cm and placed on a hot plate heated to 150°C, and 10 minutes later, "degradation odor due to oxidation" was evaluated. Nine panelists evaluated their "degradation odor due to oxidation" in accordance with the following criteria, and mean values thereof were determined as scores . The results are shown in Table 4.

### (Degradation Odor due to Oxidation)

5: Not sensed
4: Hardly not sensed
3: Slightly sensed
2: Sensed
1: Strongly sensed

**[Table 4]**

| | | Example | | | | | | | | | | | Comparative Example | | | | |
|---|---|---|---|---|---|---|---|---|---|---|---|---|---|---|---|---|---|
| | | 1 | 2 | 3 | 4 | 5 | 6 | 7 | 8 | 9 | 10 | 11 | 1 | 2 | 3 | 4 | 5 |
| Fat or oil a | | 24.7 | 24.7 | 24.7 | 24.7 | 24.7 | 24.7 | 13.4 | 13.4 | 13.4 | 47.2 | 69.8 | 13.4 | 24.7 | 47.2 | 69.8 | 24.7 |
| Fat or oil b | | 75.3 | 75.3 | 75.3 | 75.3 | 75.3 | 75.3 | 86.6 | 86.6 | 86.6 | 52.8 | 30.2 | 86.6 | 75.3 | 52.8 | 30.2 | 75.3 |
| (A) Ratio in fat or oil | [mass%] | | | | | | | | | | | | | | | | |
| C18:3 | | 20 | 20 | 20 | 20 | 20 | 20 | 15 | 15 | 15 | 30 | 40 | 15 | 20 | 30 | 40 | 20 |
| (B) RME-1 | [mass ppm] | 100 | 300 | 500 | 800 | 1,000 | 2,000 | 100 | 250 | 500 | 1,000 | 1,000 | 10 | 10 | 10 | 10 | 10 |
| (C1) SE-1 | [mass ppm] | 1 | 0 | 5 | 0 | 10 | 0 | 1 | 0 | 5 | 0 | 10 | 0 | 0 | 0 | 0 | 0 |
| (C1) SE-3 | [mass ppm] | 0 | 3 | 0 | 8 | 0 | 20 | 0 | 2.5 | 0 | 10 | 0 | 0 | 0 | 0 | 0 | 0 |
| (B)/(C18:3) | [mass ratio] | 0.0005 | 0.0015 | 0.0025 | 0.0040 | 0.0050 | 0.0100 | 0.0007 | 0.0017 | 0.0033 | 0.0033 | 0.0025 | - | - | - | - | - |
| (C1)/(B) | [mass ratio] | 0.0100 | 0.0100 | 0.0100 | 0.0100 | 0.0100 | 0.0100 | 0.0100 | 0.0100 | 0.0100 | 0.0100 | 0.0100 | - | - | - | - | - |
| Mixed tocopherols | [mass ppm] | - | - | - | - | - | - | - | - | - | - | - | - | - | - | - | 1,000 |
| OSI | | 3 | 3.4 | 4.1 | 4.5 | 4.7 | 6 | 3.5 | 4.3 | 4.9 | 3.8 | 3.5 | 3.1 | 2.6 | 1.8 | 1.4 | 3.0 |
| Degradation odor due to oxidation | | 4 | 5 | 5 | 5 | 5 | 5 | 5 | 5 | 5 | 5 | 5 | 3 | 2 | 1 | 1 | 3 |

As is apparent from the results shown in Table 4, it was confirmed that the fat or oil compositions of the present invention have high oxidative stability and have suppressed degradation odor at the time of heating as well.

### Examples 12 to 39 and Comparative Examples 6 to 9

### (Preparation of Fat or oil Compositions)

The fat or oil a, the fat or oil b, the rosemary extract (RME-1), and the thyme extract (SE-1) were mixed to prepare fat or oil compositions, respectively. The contents of α-linolenic acid (C18:3) in constituent fatty acids of the fats or oils in the fat or oil compositions (total amount: 100 mass%), and the contents of the rosemary extract, and the contents of the thyme extract in the fat or oil compositions are as shown in Table 5. It should be noted that the blending amounts of the rosemary extract and the thyme extract in the preparations were determined from the contents of the extracts in the preparations shown in Table 2 so as to achieve the contents shown in Table 5.

### Examples 40 to 67 and Comparative Examples 10 to 13

### (Preparation of Fat or oil Compositions)

The fat or oil a, the fat or oil b, the rosemary extract (RME-1), and the basil extract (SE-3) were mixed to prepare fat or oil compositions, respectively. The contents of α-linolenic acid (C18:3) in constituent fatty acids of the fats or oils in the fat or oil compositions (total amount: 100 mass%), and the contents of the rosemary extract, and the contents of the basil extract in the fat or oil compositions are as shown in Table 6. It should be noted that the blending amounts of the rosemary extract and the basil extract in the preparations were determined from the contents of the extracts in the preparations shown in Table 2 so as to achieve the contents shown in Table 6.

### (Thin Film Heating Test)

The fat or oil compositions shown in Tables 5 and 6 were subjected to the thin film heating test in the same manner as above to evaluate the "degradation odor due to oxidation". In addition, nine panelists evaluated their "odor derived from rosemary extract" and "odor derived from thyme extract" or "odor derived from basil extract" (referred to as "odor derived from plant extract") by the thin film heating test in the same manner as above in accordance with the following criteria, and mean values thereof were determined as scores . The results are shown in Tables 5 and 6.

### (Odor Derived from Rosemary Extract)

5: Not sensed
4: Hardly not sensed
3: Slightly sensed
2: Sensed
1: Strongly sensed

### (Odor Derived from Plant Extract)

5: Not sensed
4: Hardly not sensed
3: Slightly sensed
2: Sensed
1: Strongly sensed

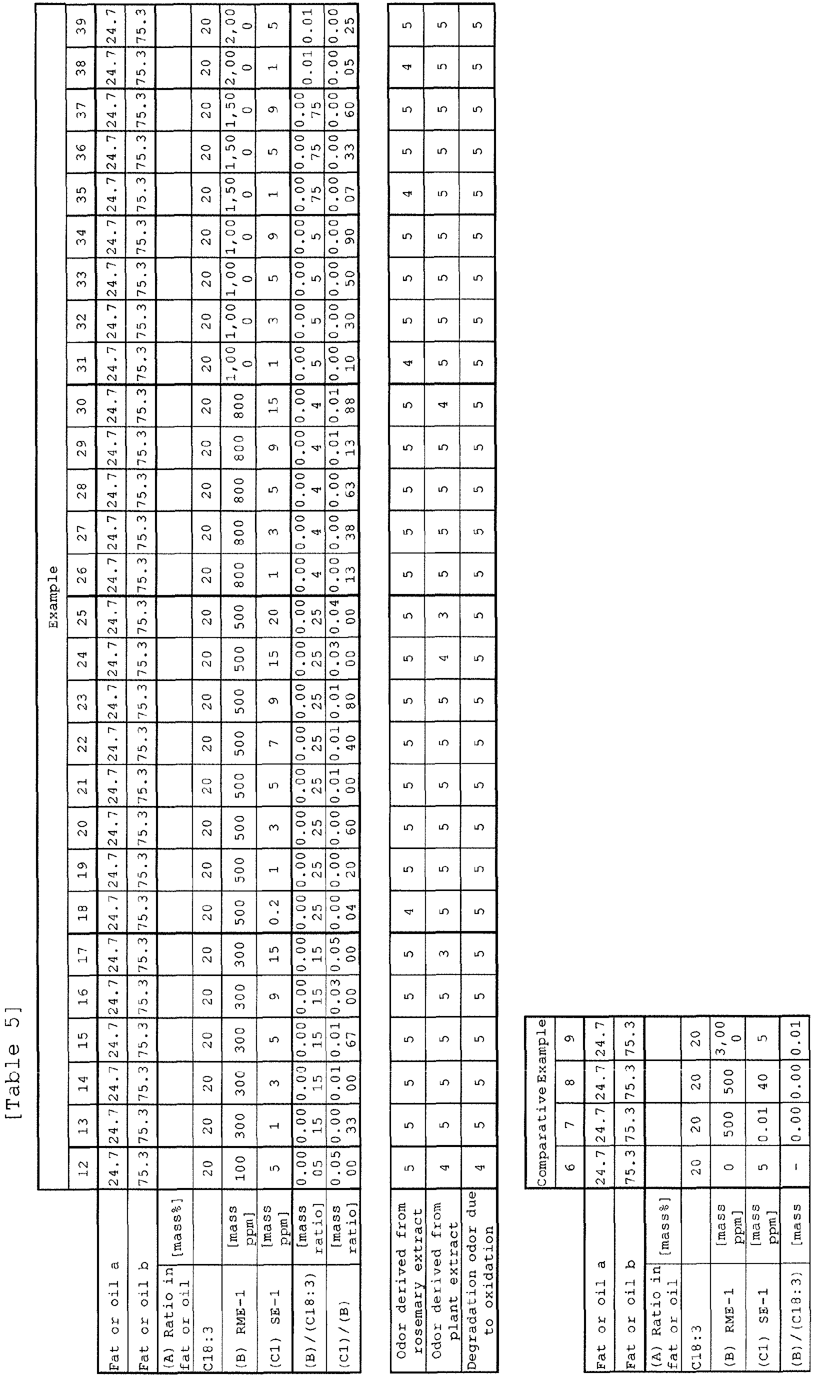

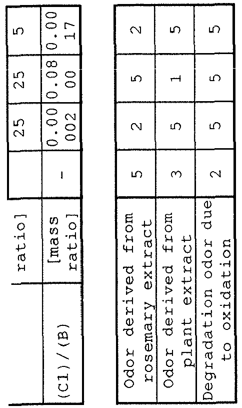

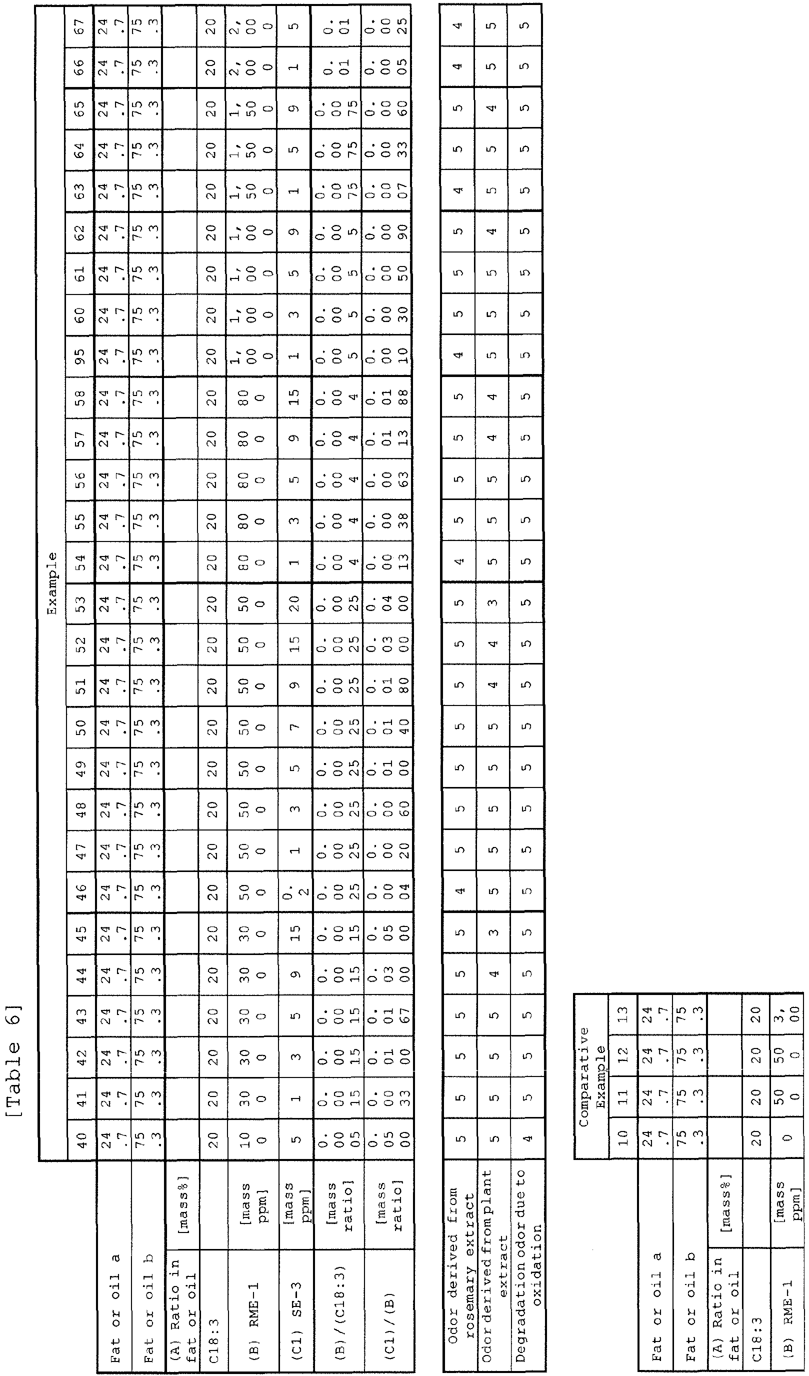

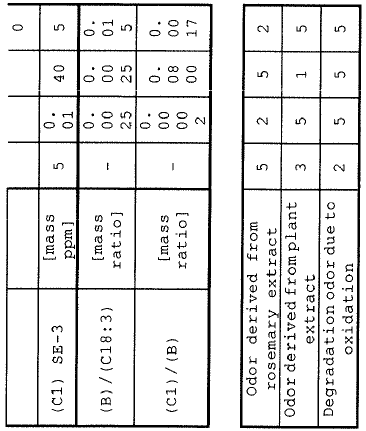

As is apparent from the results shown in Tables 5 and 6, it was confirmed that the fat or oil compositions of the present invention have less unpleasant odor peculiar to the rosemary extract and had suppressed degradation odor due to oxidation of the fat or oil at the time of heating. In addition, the odor derived from the thyme extract or the basil extract was also hardly sensed.

### Examples 68 to 73 and Comparative Examples 14 and 15

### (Preparation of Fat or oil Compositions)

The fat or oil a, the fat or oil b, the rosemary extract (RME-1), the thyme extract (SE-1), and the basil extract (SE-3) were mixed to prepare fat or oil compositions, respectively. The contents of α-linolenic acid (C18:3) in constituent fatty acids of the fats or oils in the fat or oil compositions (total amount: 100 mass%), and the contents of the rosemary extract, the contents of the thyme extract, and the contents of the basil extract in the fat or oil compositions are as shown in Table 7. It should be noted that the blending amounts of the rosemary extract, the thyme extract, and the basil extract in the preparations were determined from the contents of the extracts in the preparations shown in Table 2 so as to achieve the contents shown in Table 7.

### (Thin Film Heating Test)

The fat or oil compositions shown in Table 7 were subjected to the thin film heating test in the same manner as above to evaluate the "degradation odor due to oxidation". In addition, nine panelists evaluated their "odor derived from rosemary extract" and "odor derived from thyme extract" or "odor derived from basil extract" (referred to as "odor derived from plant extract") by the thin film heating test in the same manner as above in accordance with the above-mentioned criteria, and mean values thereof were determined as scores. The results are shown in Table 7.

**[Table 7]**

| | | Example | | | | | | Comparative Example | |
|---|---|---|---|---|---|---|---|---|---|
| | | 68 | 69 | 70 | 71 | 72 | 73 | 14 | 15 |
| Fat or oil a | | 47.2 | 47.2 | 47.2 | 69.8 | 69.8 | 69.8 | 47.2 | 69.8 |
| Fat or oil b | | 52.8 | 52.8 | 52.8 | 30.2 | 30.2 | 30.2 | 52.8 | 30.2 |
| (A) Ratio in fat or oil | [mass%] | | | | | | | | |
| C18:3 | | 30 | 30 | 30 | 40 | 40 | 40 | 30 | 40 |
| (B) RME-1 | [mass ppm] | 500 | 1,000 | 2,000 | 500 | 1,000 | 2,000 | 10 | 10 |
| (C1) SE-1 | [mass ppm] | 5 | 0 | 5 | 0 | 5 | 0 | 5 | 0 |
| (C1) SE-3 | [mass ppm] | 0 | 5 | 0 | 5 | 0 | 5 | 0 | 5 |
| (B)/(C18:3) | [mass ratio] | 0.0017 | 0.0033 | 0.0067 | 0.0013 | 0.0025 | 0.0050 | 0.00003 | 0.00003 |
| (C1)/(B) | [mass ratio] | 0.0100 | 0.0050 | 0.0025 | 0.0100 | 0.0050 | 0.0025 | 0.5000 | 0.5000 |
| Odor derived from rosemary extract | | 5 | 5 | 5 | 5 | 5 | 5 | 5 | 5 |
| Odor derived from plant extract | | 5 | 5 | 5 | 5 | 5 | 5 | 4 | 4 |
| Degradation odor due to oxidation | | 4 | 5 | 5 | 4 | 4 | 5 | 2 | 2 |

As is apparent from the results shown in Table 7, it was confirmed that the fat or oil compositions of the present invention have less unpleasant odor peculiar to the rosemary extract and had suppressed degradation odor due to oxidation of the fat or oil at the time of heating. In addition, the odor derived from the thyme extract or the basil extract was also hardly sensed.

### Examples 74 to 89

### (Preparation of Fat or oil Compositions)

The fat or oil a, the fat or oil b, the rosemary extract (RME-1 or RME-2), the thyme extract (SE-1 or SE-2), and the basil extract (SE-3 or SE-4) were mixed to prepare fat or oil compositions, respectively. The contents of α-linolenic acid (C18:3) in constituent fatty acids of the fats or oils in the fat or oil compositions (total amount: 100 mass%), and the contents of the rosemary extract, the contents of the thyme extract and the contents of the basil extract in the fat or oil compositions are as shown in Table 8 or 9. It should be noted that the blending amounts of the rosemary extract, the thyme extract, and the basil extract in the preparations were determined from the contents of the extracts in the preparations shown in Table 2 so as to achieve the contents shown in Table 8 or 9.

### (Thin Film Heating Test)

The fat or oil compositions shown in Table 8 or 9 were subjected to the thin film heating test in the same manner as above to evaluate the "degradation odor due to oxidation". In addition, nine panelists evaluated their "odor derived from rosemary extract" and "odor derived from thyme extract" or "odor derived from basil extract" (referred to as "odor derived from plant extract") by the thin film heating test in the same manner as above in accordance with the above-mentioned criteria, and mean values thereof were determined as scores. The results are shown in Table 8 or 9.

**[Table 8]**

| | | Example | | | | | |
|---|---|---|---|---|---|---|---|
| | | 74 | 75 | 76 | 77 | 78 | 79 |
| Fat or oil a | | 4.8 | 4.8 | 4.8 | 4.8 | 4.8 | 4.8 |
| Fat or oil b | | 95.2 | 95.2 | 95.2 | 95.2 | 95.2 | 95.2 |
| (A) Ratio in fat or oil | [mass%] | | | | | | |
| C18:3 | | 20 | 20 | 20 | 20 | 20 | 20 |
| (B) RME-2 | [mass ppm] | 500 | 500 | 500 | 500 | 500 | 500 |
| (C1) SE-1 | [mass ppm] | 1 | 5 | 9 | 0 | 0 | 0 |
| (C1) SE-3 | [mass ppm] | 0 | 0 | 0 | 1 | 5 | 9 |
| (B)/ (C18:3) | [mass ratio] | 0.0025 | 0.0025 | 0.0025 | 0.0025 | 0.0025 | 0.0025 |
| (C1) / (B) | [mass ratio] | 0.0020 | 0.0100 | 0.0180 | 0.0020 | 0.0100 | 0.0180 |
| Odor derived from rosemary extract | | 5 | 5 | 5 | 5 | 5 | 5 |
| Odor derived from plant extract | | 5 | 5 | 4 | 5 | 5 | 4 |
| Degradation odor due to oxidation | | 5 | 5 | 5 | 5 | 5 | 5 |

**[Table 9]**

| | | Example | | | | | | | | | |
|---|---|---|---|---|---|---|---|---|---|---|---|
| | | 80 | 81 | 82 | 83 | 84 | 85 | 86 | 87 | 88 | 89 |
| Fat or oil a | | 4.8 | 4.8 | 4.8 | 4.8 | 4.8 | 4.8 | 4.8 | 4.8 | 4.8 | 4.8 |
| Fat or oil b | | 95.2 | 95.2 | 95.2 | 95.2 | 95.2 | 95.2 | 95.2 | 95.2 | 95.2 | 95.2 |
| (A) Ratio in fat or oil | [mass%] | | | | | | | | | | |
| C18:3 | | 20 | 20 | 20 | 20 | 20 | 20 | 20 | 20 | 20 | 20 |
| (B) RME-1 | [mass ppm] | 500 | 500 | 500 | 500 | 500 | 500 | 500 | 500 | 500 | 500 |
| (C1) SE-2 | [mass ppm] | 0.2 | 0.5 | 1 | 5 | 9 | 0 | 0 | 0 | 0 | 0 |
| (C1) SE-4 | [mass ppm] | 0 | 0 | 0 | 0 | 0 | 0.2 | 0.5 | 1 | 5 | 9 |
| (B) / (C18:3) | [mass ratio] | 0.0025 | 0.0025 | 0.0025 | 0.0025 | 0.0025 | 0.0025 | 0.0025 | 0.0025 | 0.0025 | 0.0025 |
| (C1) / (B) | [mass ratio] | 0.0004 | 0.0010 | 0.0020 | 0.0100 | 0.0180 | 0.0004 | 0.0010 | 0.0020 | 0.0100 | 0.0180 |
| Odor derived from rosemary extract | | 4 | 5 | 5 | 5 | 5 | 4 | 5 | 5 | 5 | 5 |
| Odor derived from plant extract | | 5 | 5 | 5 | 5 | 4 | 5 | 5 | 5 | 5 | 4 |
| Degradation odor due to oxidation | | 5 | 5 | 5 | 5 | 5 | 5 | 5 | 5 | 5 | 5 |

As is apparent from the results shown in Table 8 or 9, in the fat or oil compositions of the present invention, it was confirmed that unpleasant odor peculiar to the rosemary extract was hardly sensed and degradation odor due to oxidation of the fat or oil at the time of heating was suppressed. In addition, the odor derived from the thyme extract or the basil extract was also hardly sensed.

### Examples 90 to 100 and Comparative Examples 16 to 20

### (Preparation of Fat or oil Compositions)

The fat or oil a, the fat or oil b, the rosemary extract (RME-1), the clove extract (OE-1), and mixed tocopherols (manufactured by Archer Daniels Midland) were mixed to prepare fat or oil compositions, respectively. The contents of α-linolenic acid (C18:3) in constituent fatty acids of the fats or oils in the fat or oil compositions (total amount: 100 mass%), and the contents of the rosemary extract, the contents of the clove extract, and the contents of the mixed tocopherols in the fat or oil compositions are as shown in Table 10. It should be noted that the blending amounts of the rosemary extract and the clove extract in the preparations were determined from the contents of the extracts in the preparations shown in Tables 2 and 3 so as to achieve the contents shown in Table 10.

### (Evaluation of Oxidative Stability)

The fat or oil compositions shown in Table 10 were used to evaluate oxidative stability. The oxidative stability was evaluated in accordance with "CDM test (2.5.1.2-1996)" described in "Standard Methods for the Analysis of Fats, Oils and Related Materials" edited by Japan Oil Chemists' Society by calculating induction time (hr), and the results were each represented as an oxidative stability index (OSI). The results are shown in Table 10.

### (Thin Film Heating Test)

The fat or oil compositions shown in Table 10 were subjected to a thin film heating test. In the thin film heating test, 3 g of each of the fat or oil compositions was added to a stainless-steel petri dish with a diameter of 6 cm and placed on a hot plate heated to 150°C, and 10 minutes later, "degradation odor due to oxidation" was evaluated. Nine panelists evaluated their "degradation odor due to oxidation" in accordance with the following criteria, and mean values thereof were determined as scores . The results are shown in Table 10.

### (Degradation Odor due to Oxidation)

- 5:: Not sensed
- 4:: Hardly not sensed
- 3:: Slightly sensed
- 2:: Sensed
- 1:: Strongly sensed

**[Table 10]**

| | | Example | | | | | | | | | | | Comparative Example | | | | |
|---|---|---|---|---|---|---|---|---|---|---|---|---|---|---|---|---|---|
| | | 90 | 91 | 92 | 93 | 94 | 95 | 96 | 97 | 98 | 99 | 100 | 16 | 17 | 18 | 19 | 20 |
| Fat or oil a | | 24.7 | 24.7 | 24.7 | 24.7 | 24.7 | 24.7 | 13.4 | 13.4 | 13.4 | 47.2 | 69.8 | 13.4 | 24.7 | 47.2 | 69.8 | 24.7 |
| Fat or oil b | | 75.3 | 75.3 | 75.3 | 75.3 | 75.3 | 75.3 | 86.6 | 86.6 | 86.6 | 52.8 | 30.2 | 86.6 | 75.3 | 52.8 | 30.2 | 75.3 |
| (A) Ratio in fat or oil | [mass%] | | | | | | | | | | | | | | | | |
| C18:3 | | 20 | 20 | 20 | 20 | 20 | 20 | 15 | 15 | 15 | 30 | 40 | 15 | 20 | 30 | 40 | 20 |
| (B) RME-1 | [mass ppm] | 100 | 300 | 500 | 800 | 1,000 | 2,000 | 100 | 250 | 500 | 1,000 | 1,000 | 10 | 10 | 10 | 10 | 10 |
| (C2) OE-1 | [mass ppm] | 0.2 | 0.6 | 1 | 1.6 | 2 | 4 | 0.2 | 0.5 | 1 | 2 | 2 | 0 | 0 | 0 | 0 | 0 |
| (B) / (C18:3) | [mass ratio] | 0.0005 | 0.0015 | 0.0025 | 0.0040 | 0.0050 | 0.0100 | 0.0007 | 0.0017 | 0.0033 | 0.0033 | 0.0025 | - | - | - | - | - |
| (C2) / (B) | [mass ratio] | 0.0020 | 0.0020 | 0.0020 | 0.0020 | 0.0020 | 0.0020 | 0.0020 | 0.0020 | 0.0020 | 0.0020 | 0.0020 | - | - | - | - | - |
| Mixed tocopherols | [mass ppm] | - | - | - | - | - | - | - | - | - | - | - | - | - | - | - | 1,000 |
| OSI | | 3 | 3.4 | 4.1 | 4.5 | 4.7 | 6 | 3.5 | 4.3 | 4.9 | 3.8 | 3.5 | 3.1 | 2.6 | 1.8 | 1.4 | 3.0 |
| Degradation odor due to oxidation | | 4 | 5 | 5 | 5 | 5 | 5 | 5 | 5 | 5 | 5 | 5 | 3 | 2 | 1 | 1 | 3 |

As is apparent from the results shown in Table 10, it was confirmed that the fat or oil compositions of the present invention have high oxidative stability and have suppressed degradation odor at the time of heating as well.

### Examples 101 to 120 and Comparative Examples 21 to 24

### (Preparation of Fat or oil Compositions)

The fat or oil a, the fat or oil b, the rosemary extract (RME-1), and the clove extract (OE-1) were mixed to prepare fat or oil compositions, respectively. The contents of α-linolenic acid (C18:3) in constituent fatty acids of the fats or oils in the fat or oil compositions (total amount: 100 mass%), and the contents of the rosemary extract, and the contents of the clove extract in the fat or oil compositions are as shown in Table 11. It should be noted that the blending amounts of the rosemary extract and the clove extract in the preparations were determined from the contents of the extracts in the preparations shown in Tables 2 and 3 so as to achieve the contents shown in Table 11.

### Examples 121 to 127 and Comparative Examples 25 to 28

### (Preparation of Fat or oil Compositions)

The fat or oil a, the fat or oil b, the rosemary extract (RME-1), and the oregano extract (OE-3) were mixed to prepare fat or oil compositions, respectively. The contents of α-linolenic acid (C18:3) in constituent fatty acids of the fats or oils in the fat or oil compositions (total amount: 100 mass%), and the contents of the rosemary extract, and the contents of the oregano extract in the fat or oil compositions are as shown in Table 12. It should be noted that the blending amounts of the rosemary extract and the oregano extract in the preparations were determined from the contents of the extracts in the preparations shown in Tables 2 and 3 so as to achieve the contents shown in Table 12.

### Examples 128 to 134 and Comparative Examples 29 to 32

### (Preparation of Fat or oil Compositions)

The fat or oil a, the fat or oil b, the rosemary extract (RME-1), and the bay laurel extract (OE-4) were mixed to prepare fat or oil compositions, respectively. The contents of α-linolenic acid (C18:3) in constituent fatty acids of the fats or oils in the fat or oil compositions (total amount: 100 mass%), and the contents of the rosemary extract, and the contents of the bay laurel extract in the fat or oil compositions are as shown in Table 13. It should be noted that the blending amounts of the rosemary extract and the bay laurel extract in the preparations were determined from the contents of the extracts in the preparations shown in Tables 2 and 3 so as to achieve the contents shown in Table 13.

### (Thin Film Heating Test)

The fat or oil compositions shown in Tables 11 to 13 were subjected to the thin film heating test in the same manner as above to evaluate the "degradation odor due to oxidation". In addition, nine panelists evaluated their "odor derived from rosemary extract", and "odor derived from clove extract", "odor derived from oregano extract", or "odor derived from bay laurel extract" (referred to as "odor derived from plant extract") by the thin film heating test in the same manner as above in accordance with the following criteria, and mean values thereof were determined as scores . The results are shown in Tables 11 to 13.

### (Odor Derived from Rosemary Extract)

- 5:: Not sensed
- 4:: Hardly not sensed
- 3:: Slightly sensed
- 2:: Sensed
- 1:: Strongly sensed

### (Odor Derived from Plant Extract)

- 5:: Not sensed
- 4:: Hardly not sensed
- 3:: Slightly sensed
- 2:: Sensed
- 1:: Strongly sensed

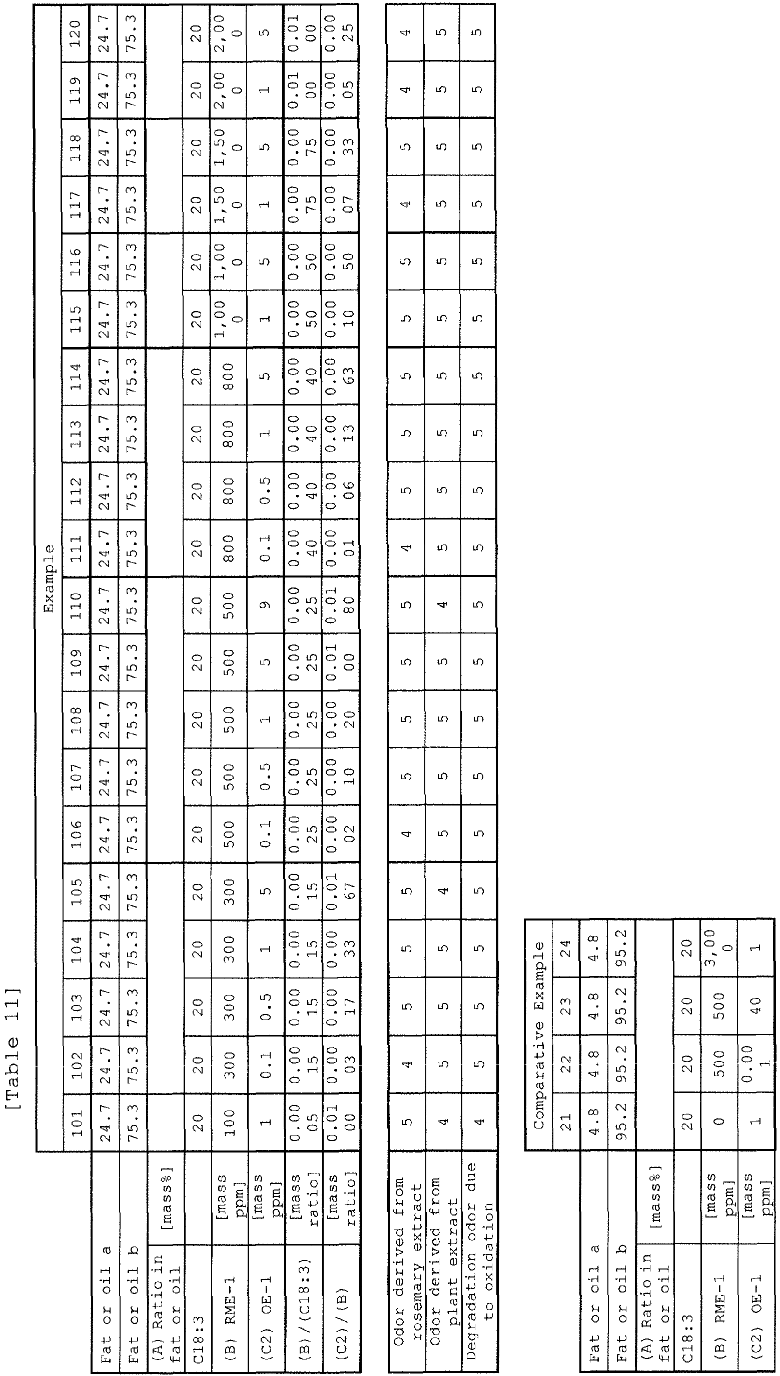

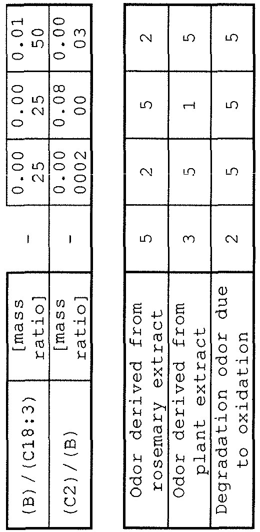

**[Table 12]**

| | | Example | | | | | | | Comparative Example | | | |
|---|---|---|---|---|---|---|---|---|---|---|---|---|
| | | 121 | 122 | 123 | 124 | 125 | 126 | 127 | 25 | 26 | 27 | 28 |
| Fat or oil a | | 24.7 | 24.7 | 24.7 | 24.7 | 24.7 | 24.7 | 24.7 | 24.7 | 24.7 | 24.7 | 24.7 |
| Fat or oil b | | 75.3 | 75.3 | 75.3 | 75.3 | 75.3 | 75.3 | 75.3 | 75.3 | 75.3 | 75.3 | 75.3 |
| (A) Ratio in fat or oil | [mass%] | | | | | | | | | | | |
| C18:3 | | 20 | 20 | 20 | 20 | 20 | 20 | 20 | 20 | 20 | 20 | 20 |
| (B) RME-1 | [mass ppm] | 300 | 300 | 500 | 500 | 500 | 1,000 | 1,000 | 0 | 500 | 500 | 3,000 |
| (C2) OE-3 | [mass ppm] | 1 | 5 | 1 | 5 | 9 | 1 | 5 | 1 | 0.001 | 40 | 1 |
| (B) / (C18: 3) | [mass ratio] | 0.0015 | 0.0015 | 0.0025 | 0.0025 | 0.0025 | 0.0050 | 0.0050 | - | 0.0025 | 0.0025 | 0.0150 |
| (C2) / (B) | [mass ratio] | 0.0033 | 0.0167 | 0.0020 | 0.0100 | 0.0180 | 0.0010 | 0.0050 | - | 0.000002 | 0.0800 | 0.0003 |
| | | | | | | | | | | | | |
| Odor derived from rosemary extract | | 5 | 5 | 5 | 5 | 5 | 5 | 5 | 5 | 2 | 5 | 2 |
| Odor derived from plant extract | | 5 | 4 | 5 | 4 | 4 | 5 | 4 | 2 | 5 | 1 | 5 |
| Degradation odor due to oxidation | | 5 | 5 | 5 | 5 | 5 | 5 | 5 | 2 | 5 | 5 | 5 |

**[Table 13]**

| | | Example | | | | | | | Comparative Example | | | |
|---|---|---|---|---|---|---|---|---|---|---|---|---|
| | | 128 | 129 | 130 | 131 | 132 | 133 | 134 | 29 | 30 | 31 | 32 |
| Fat or oil a | | 24.7 | 24.7 | 24.7 | 24.7 | 24.7 | 24.7 | 24.7 | 24.7 | 24.7 | 24.7 | 24.7 |
| Fat or oil b | | 75.3 | 75.3 | 75.3 | 75.3 | 75.3 | 75.3 | 75.3 | 75.3 | 75.3 | 75.3 | 75.3 |
| (A) Ratio in fat or oil | [mass% ] | | | | | | | | | | | |
| C18:3 | | 20 | 20 | 20 | 20 | 20 | 20 | 20 | 20 | 20 | 20 | 20 |
| (B) RME-1 | [mass ppm] | 300 | 300 | 500 | 500 | 500 | 1,000 | 1,000 | 0 | 500 | 500 | 3,000 |
| (C2) OE-4 | [mass ppm] | 1 | 5 | 1 | 5 | 9 | 1 | 5 | 1 | 0.001 | 40 | 1 |
| (B) / (C18:3) | [mass ratio] | 0.0015 | 0.0015 | 0.0025 | 0.0025 | 0.0025 | 0.005 | 0.005 | - | 0.0025 | 0.0025 | 0.0150 |
| (C2) / (B) | [mass ratio] | 0.0033 | 0.0167 | 0.0020 | 0.0100 | 0.0180 | 0.0010 | 0.0050 | - | 0.000002 | 0.0800 | 0.0003 |
| | | | | | | | | | | | | |
| Odor derived from rosemary extract | | 5 | 5 | 5 | 5 | 5 | 4 | 4 | 5 | 2 | 5 | 2 |
| Odor derived from plant extract | | 4 | 4 | 4 | 4 | 3 | 4 | 4 | 3 | 5 | 1 | 5 |
| Degradation odor due to oxidation | | 5 | 5 | 5 | 5 | 5 | 5 | 5 | 2 | 5 | 5 | 5 |

As is apparent from the results shown in Tables 11 to 13, it was confirmed that the fat or oil compositions of the present invention have less unpleasant odor peculiar to the rosemary extract and had suppressed degradation odor due to oxidation of the fat or oil at the time of heating. In addition, the odor derived from the clove extract, the oregano extract, or the bay laurel extract was also hardly sensed.

### Examples 135 to 140 and Comparative Examples 33 and 34

### (Preparation of Fat or oil Compositions)

The fat or oil a, the fat or oil b, the rosemary extract (RME-1), and the clove extract (OE-1) were mixed to prepare fat or oil compositions, respectively. The contents of α-linolenic acid (C18:3) in constituent fatty acids of the fats or oils in the fat or oil compositions (total amount: 100 mass%), and the contents of the rosemary extract, and the contents of the clove extract in the fat or oil compositions are as shown in Table 14. It should be noted that the blending amounts of the rosemary extract and the clove extract in the preparations were determined from the contents of the extracts in the preparations shown in Tables 2 and 3 so as to achieve the contents shown in Table 14.

### (Thin Film Heating Test)

The fat or oil compositions shown in Table 14 were subjected to the thin film heating test in the same manner as above to evaluate the"degradation odor due to oxidation". In addition, nine panelists evaluated their "odor derived from rosemary extract" and "odor derived from clove extract" (referred to as "odor derived from plant extract") by the thin film heating test in the same manner as above in accordance with the above-mentioned criteria, and mean values thereof were determined as scores. The results are shown in Table 14.

**[Table 14]**

| | | Example | | | | | | Comparative Example | |
|---|---|---|---|---|---|---|---|---|---|
| | | 135 | 136 | 137 | 138 | 139 | 140 | 33 | 34 |
| Fat or oil a | | 47.2 | 47.2 | 47.2 | 69.8 | 69.8 | 69.8 | 47.2 | 69.8 |
| Fat or oil b | | 52.8 | 52.8 | 52.8 | 30.2 | 30.2 | 30.2 | 52.8 | 30.2 |
| (A) Ratio in fat or oil | [mass%] | | | | | | | | |
| C18:3 | | 30 | 30 | 30 | 40 | 40 | 40 | 30 | 40 |
| (B) RME-1 | [mass ppm] | 500 | 1,000 | 2,000 | 500 | 1,000 | 2,000 | 10 | 10 |
| (C2) OE-1 | [mass ppm] | 1 | 1 | 1 | 1 | 1 | 1 | 1 | 1 |
| (B) / (C18: 3 ) | [mass ratio] | 0.0017 | 0.0033 | 0.0067 | 0.0013 | 0.0025 | 0.0050 | 0.00003 | 0.0000 3 |
| (C2) / (B) | [mass ratio] | 0.0020 | 0.0010 | 0.0005 | 0.0020 | 0.0010 | 0.0005 | 0.1000 | 0.1000 |
| Odor derived from rosemary extract | | 5 | 5 | 5 | 5 | 5 | 5 | 5 | 5 |
| Odor derived from plant extract | | 5 | 5 | 5 | 5 | 5 | 5 | 4 | 4 |
| Degradation odor due to oxidation | | 4 | 5 | 5 | 4 | 4 | 5 | 2 | 2 |

As is apparent from the results shown in Table 14, in the fat or oil compositions of the present invention, unpleasant odor peculiar to the rosemary extract was hardly sensed and degradation odor due to oxidation of the fat or oil at the time of heating was suppressed. In addition, the odor derived from the clove extract was also hardly sensed.

### Examples 141 to 150

### (Preparation of Fat or oil Compositions)

The fat or oil a, the fat or oil b, the rosemary extract (RME-1 or RME-2), the clove extract (OE-1 or OE-2), and the bay laurel extract (OE-5) were mixed to prepare fat or oil compositions, respectively. The contents of α-linolenic acid (C18:3) in constituent fatty acids of the fats or oils in the fat or oil compositions (total amount: 100 mass%), and the contents of the rosemary extract, the contents of the clove extract, and the contents of the bay laurel extract in the fat or oil compositions are as shown in Table 15 or 16. It should be noted that the blending amounts of the rosemary extract, the clove extract, and the bay laurel extract in the preparations were determined from the contents of the extracts in the preparations shown in Tables 2 and 3 so as to achieve the contents shown in Table 15 or 16.

### (Thin Film Heating Test)

The fat or oil compositions shown in Table 15 or 16 were subj ected to the thin film heating test in the same manner as above to evaluate the"degradation odor due to oxidation". In addition, nine panelists evaluated their "odor derived from rosemary extract", and "odor derived from clove extract" or "odor derived from bay laurel extract" (referred to as "odor derived from plant extract") by the thin film heating test in the same manner as above in accordance with the above-mentioned criteria, and mean values thereof were determined as scores. The results are shown in Table 15 or 16.

**[Table 15]**

| | | Example | | |
|---|---|---|---|---|
| | | 141 | 142 | 143 |
| Fat or oil a | | 4.8 | 4.8 | 4.8 |
| Fat or oil b | | 95.2 | 95.2 | 95.2 |
| (A) Ratio in fat or oil | [mass%] | | | |
| C18:3 | | 20 | 20 | 20 |
| (B) RME-2 | [mass ppm] | 500 | 500 | 500 |
| (C2) OE-1 | [mass ppm] | 0.1 | 1 | 5 |
| (B) / (C18:3) | [mass ratio] | 0.0025 | 0.0025 | 0.0025 |
| (C2) / (B) | [mass ratio] | 0.0002 | 0.0020 | 0.0100 |
| Odor derived from rosemary extract | | 5 | 5 | 5 |
| Odor derived from plant extract | | 5 | 5 | 4 |
| Degradation odor due to oxidation | | 5 | 5 | 5 |

**[Table 16]**

| | | Example | | | | | | |
|---|---|---|---|---|---|---|---|---|
| | | 144 | 145 | 146 | 147 | 148 | 149 | 150 |
| Fat or oil a | | 4.8 | 4.8 | 4.8 | 4.8 | 4.8 | 4.8 | 4.8 |
| Fat or oil b | | 95.2 | 95.2 | 95.2 | 95.2 | 95.2 | 95.2 | 95.2 |
| (A) Ratio in fat or oil | [mass%] | | | | | | | |
| C18:3 | | 20 | 20 | 20 | 20 | 20 | 20 | 20 |
| (B) RME-1 | [mass ppm] | 500 | 500 | 500 | 500 | 500 | 500 | 500 |
| (C2) OE-2 | [mass ppm] | 0.1 | 0.5 | 1 | 5 | - | - | - |
| (C2) OE-5 | [mass ppm] | - | - | - | - | 0.1 | 1 | 5 |
| (B) / (C18:3) | [mass ratio] | 0.0025 | 0.0025 | 0.0025 | 0.0025 | 0.0025 | 0.0025 | 0.0025 |
| (C2) / (B) | [mass ratio] | 0.0002 | 0.0010 | 0.0020 | 0.0100 | 0.0002 | 0.0020 | 0.0100 |
| Odor derived from rosemary extract | | 4 | 5 | 5 | 5 | 4 | 5 | 5 |
| Odor derived from plant extract | | 5 | 5 | 5 | 4 | 5 | 5 | 4 |
| Degradation odor due to oxidation | | 5 | 5 | 5 | 5 | 5 | 5 | 5 |

As is apparent from the results shown in Table 15 or 16, in the fat or oil compositions of the present invention, unpleasant odor peculiar to the rosemary extract was hardly sensed and degradation odor due to oxidation of the fat or oil at the time of heating was suppressed. In addition, the odor derived from the clove extract or the bay laurel extract was also hardly sensed.

## Claims

1. A fat or oil composition, comprising the following components (A), (B), and (C1) :
(A) a fat or oil in which a content of α-linolenic acid in constituent fatty acids of the fat or oil is from 15 to 60 mass%;
(B) a rosemary extract at a content of from 0.005 to 0.25 mass%; and
(C1) a thyme extract, a basil extract, or a combination thereof at a content of from 0.00001 to 0.0025 mass%.

2. The fat or oil composition according to claim 1, wherein a ratio (content mass ratio) of the content of the component (C1) to the content of the rosemary extract as the component (B), [(C1) / (B)], is from 0.0003 to 0.08.

3. The fat or oil composition according to claim 1, wherein a ratio (content mass ratio) of the content of the component (C1) to the content of the rosemary extract as the component (B), [(C1) / (B)], is from 0.002 to 0.019.

4. A fat or oil composition, comprising the following components (A), (B), and (C2):
(A) a fat or oil in which a content of α-linolenic acid in constituent fatty acids of the fat or oil is from 15 to 60 mass%;
(B) a rosemary extract at a content of from 0.005 to 0.25 mass%; and
(C2) at least one selected from the group consisting of a clove extract, an oregano extract, and a bay laurel extract at a content of from 0.00001 to 0.001 mass%.

5. The fat or oil composition according to claim 4, wherein a ratio (content mass ratio) of the content of the component (C2) to the content of the rosemary extract as the component (B), [(C2) / (B)], is from 0.0001 to 0.03.

6. The fat or oil composition according to claim 4, wherein a ratio (content mass ratio) of the content of the component (C2) to the content of the rosemary extract as the component (B), [(C2) / (B)], is from 0.0001 to 0.018.

7. The fat or oil composition according to any one of claims 1 to 6, wherein a ratio (content mass ratio) of the content of the rosemary extract as the component (B) in the fat or oil composition to the content of the α-linolenic acid in the constituent fatty acids of the fat or oil as the component (A), [(B)/(C18:3)], is from 0.0002 to 0.015.

8. The fat or oil composition according to any one of claims 1 to 7, wherein a ratio (content mass ratio) of the content of the rosemary extract as the component (B) in the fat or oil composition to the content of the α-linolenic acid in the constituent fatty acids of the fat or oil as the component (A), [(B)/(C18:3)], is from 0.001 to 0.01.

9. The fat or oil composition according to any one of claims 1 to 8, wherein the component (A) comprises at least one of fats or oils selected from the group consisting of linseed oil, Japanese basil oil, and perilla oil.

10. The fat or oil composition according to any one of claims 1 to 9, wherein the content of the rosemary extract as the component (B) is from 0.01 to 0.2 mass%.

11. The fat or oil composition according to any one of claims 1 to 10, wherein the content of the rosemary extract as the component (B) is from 0.02 to 0.17 mass%.

12. The fat or oil composition according to any one of claims 1 to 11, comprising from 95 to 99.95 mass% of the fat or oil as the component (A).

13. The fat or oil composition according to any one of claims 1 to 12, wherein a content of triacylglycerols in the fat or oil as the component (A) is from 78 to 100 mass%.

## Patentansprüche

1. Fett- oder Ölzusammensetzung, umfassend die folgenden Komponenten (A), (B) und (C1) :
(A) ein Fett oder Öl, in dem ein Gehalt an α-Linolensäure in den Fettsäurebestandteilen des Fettes oder Öls 15 bis 60 Massen-% beträgt;
(B) einen Rosmarinextrakt zu einem Gehalt von 0,005 bis 0,25 Massen-%; und
(C1) einen Thymianextrakt, einen Basilikumextrakt oder eine Kombination davon zu einem Gehalt von 0,00001 bis 0,0025 Massen-%.

2. Fett- oder Ölzusammensetzung gemäß Anspruch 1, wobei ein Verhältnis (Masseninhaltsverhältnis) von dem Gehalt der Komponente (C1) zu dem Gehalt des Rosmarinextrakts als Komponente (B), [(C1) / (B)], 0,0003 bis 0,08 ist.

3. Fett- oder Ölzusammensetzung gemäß Anspruch 1, wobei ein Verhältnis (Masseninhaltsverhältnis) von dem Gehalt der Komponente (C1) zu dem Gehalt des Rosmarinextrakts als Komponente (B), [(C1) / (B)], 0,002 bis 0,019 ist.

4. Fett- oder Ölzusammensetzung, umfassend die folgenden Komponenten (A), (B) und (C2):
(A) ein Fett oder Öl, in dem ein Gehalt an α-Linolensäure in den Fettsäurebestandteilen des Fettes oder Öls 15 bis 60 Massen-% beträgt;
(B) einen Rosmarinextrakt zu einem Gehalt von 0,005 bis 0,25 Massen-%; und
(C2) mindestens einen Vertreter, ausgewählt aus der Gruppe, bestehend aus einem Nelkenextrakt, einem Oreganoextrakt und einem Gewürzlorbeerextrakt (bay laurel extract) zu einem Gehalt von 0,00001 bis 0,001 Massen-%.

5. Fett- oder Ölzusammensetzung gemäß Anspruch 4, wobei ein Verhältnis (Masseninhaltsverhältnis) von dem Gehalt der Komponente (C2) zu dem Gehalt des Rosmarinextrakts als Komponente (B), [(C2) / (B)], 0,0001 bis 0,03 ist.

6. Fett- oder Ölzusammensetzung gemäß Anspruch 4, wobei ein Verhältnis (Masseninhaltsverhältnis) von dem Gehalt der Komponente (C2) zu dem Gehalt des Rosmarinextrakts als Komponente (B), [(C2) / (B)], 0,0001 bis 0,018 ist.

7. Fett- oder Ölzusammensetzung gemäß einem der Ansprüche 1 bis 6, wobei ein Verhältnis (Masseninhaltsverhältnis) von dem Gehalt des Rosmarinextrakts als Komponente (B) in der Fett- oder Ölzusammensetzung zu dem Gehalt der α-Linolensäure in den Fettsäurebestandteilen des Fetts oder Öls als Komponente (A), [(B)/(C18:3)], 0,0002 bis 0,015 ist.

8. Fett- oder Ölzusammensetzung gemäß einem der Ansprüche 1 bis 7, wobei ein Verhältnis (Masseninhaltsverhältnis) von dem Gehalt des Rosmarinextrakts als Komponente (B) in der Fett- oder Ölzusammensetzung zu dem Gehalt der α-Linolensäure in den Fettsäurebestandteilen des Fetts oder Öls als Komponente (A), [(B)/(C18:3)], 0,001 bis 0,01 ist.

9. Fett- oder Ölzusammensetzung gemäß einem der Ansprüche 1 bis 8, wobei die Komponente (A) mindestens einen Vertreter von Fetten oder Ölen umfasst, der aus der Gruppe ausgewählt ist, die aus Leinsamenöl, japanischem Basilikumöl und Perillaöl besteht.

10. Fett- oder Ölzusammensetzung gemäß einem der Ansprüche 1 bis 9, wobei der Gehalt des Rosmarinextrakts als Komponente (B) 0,01 bis 0,2 Massen-% beträgt.

11. Fett- oder Ölzusammensetzung gemäß einem der Ansprüche 1 bis 10, wobei der Gehalt des Rosmarinextrakts als Komponente (B) 0,02 bis 0,17 Massen-% beträgt.

12. Fett- oder Ölzusammensetzung gemäß einem der Ansprüche 1 bis 11, umfassend 95 bis 99,95 Massen-% des Fettes oder Öls als Komponente (A).

13. Fett- oder Ölzusammensetzung gemäß einem der Ansprüche 1 bis 12, wobei der Gehalt an Triacylglycerolen in dem Fett oder Öl als Komponente (A) 78 bis 100 Massen-% beträgt.

## Revendications

1. Composition de matière grasse ou d'huile, comprenant les composants (A), (B) et (C1) suivants :
(A) une matière grasse ou huile dans laquelle une teneur en acide α-linolénique dans les acides gras constituants de la matière grasse ou huile est de 15 à 60 % en masse ;
(B) un extrait de romarin à une teneur de 0,005 à 0,25 % en masse ; et
(C1) un extrait de thym, un extrait de basilique, ou une combinaison de ceux-ci à une teneur de 0,00001 à 0,0025 % en masse.

2. Composition de matière grasse ou d'huile selon la revendication 1, dans laquelle un rapport (rapport massique de teneur) de la teneur en composant (C1) sur la teneur en extrait de romarin en tant que composant (B), [(C1)/(B)], est de 0,0003 à 0,08.

3. Composition de matière grasse ou d'huile selon la revendication 1, dans laquelle un rapport (rapport massique de teneur) de la teneur en composant (C1) sur la teneur en extrait de romarin en tant que composant (B), [(C1)/(B)], est de 0,002 à 0,019.

4. Composition de matière grasse ou d'huile, comprenant les composants (A), (B) et (C2) suivants :
(A) une matière grasse ou huile dans laquelle une teneur en acide α-linolénique dans les acides gras constituants de la matière grasse ou huile est de 15 à 60 % en masse ;
(B) un extrait de romarin à une teneur de 0,005 à 0,25 % en masse ; et
(C2) au moins un sélectionné dans le groupe constitué d'un extrait de clou de girofle, un extrait d'origan et un extrait de baies de laurier à une teneur de 0,00001 à 0,001 % en masse.

5. Composition de matière grasse ou d'huile selon la revendication 4, dans laquelle un rapport (rapport massique de teneur) de la teneur en composant (C2) sur la teneur en extrait de romarin en tant que composant (B), [(C2)/(B)], est de 0,0001 à 0,03.

6. Composition de matière grasse ou d'huile selon la revendication 4, dans laquelle un rapport (rapport massique de teneur) de la teneur en composant (C2) sur la teneur en extrait de romarin en tant que composant (B), [(C2)/(B)], est de 0,0001 à 0,018.

7. Composition de matière grasse ou d'huile selon l'une quelconque des revendications 1 à 6, dans laquelle un rapport (rapport massique de teneur) de la teneur en extrait de romarin en tant que composant (B) dans la composition de matière grasse ou d'huile sur la teneur en acide α-linolénique dans les acides gras constituants de la matière grasse ou huile en tant que composant (A), [(B)/(C18:3)], est de 0,0002 à 0,015.

8. Composition de matière grasse ou d'huile selon l'une quelconque des revendications 1 à 7, dans laquelle un rapport (rapport massique de teneur) de la teneur en extrait de romarin en tant que composant (B) dans la composition de matière grasse ou d'huile sur la teneur en acide α-linolénique dans les acides gras constituants de la matière grasse ou huile en tant que composant (A), [(B)/(C18:3)], est de 0,001 à 0,01.

9. Composition de matière grasse ou d'huile selon l'une quelconque des revendications 1 à 8, dans laquelle le composant (A) comprend au moins l'une de matières grasses ou d'huiles sélectionnées dans le groupe constitué d'huile de lin, d'huile de basilic japonais et d'huile de périlla.

10. Composition de matière grasse ou d'huile selon l'une quelconque des revendications 1 à 9, dans laquelle la teneur en extrait de romarin en tant que composant (B) est de 0,01 à 0,2 % en masse.

11. Composition de matière grasse ou d'huile selon l'une quelconque des revendications 1 à 10, dans laquelle la teneur en extrait de romarin en tant que composant (B) est de 0,02 à 0,17 % en masse.

12. Composition de matière grasse ou d'huile selon l'une quelconque des revendications 1 à 11, comprenant de 95 à 99,95 % en masse de la matière grasse ou huile en tant que composant (A).

13. Composition de matière grasse ou d'huile selon l'une quelconque des revendications 1 à 12, dans laquelle une teneur en triacylglycérols dans la matière grasse ou huile en tant que composant (A) est de 78 à 100 % en masse.
